# EUROPÄISCHE PATENTSCHRIFT

(11) **EP 3 875 387 B1**
(45) Veröffentlichungstag und Bekanntmachung des Hinweises auf die Patenterteilung: **30.08.2023**
(21) Anmeldenummer: 20161169.6
(22) Anmeldetag: 05.03.2020
(51) Int. Cl.: B65D 30/00, B65D 30/18, B65D 30/20, B65D 33/02

(54) **KUNSTSTOFFFOLIEN-BODENBEUTEL UND DESSEN VERWENDUNG SOWIE ZUSCHNITT FÜR EINEN KUNSTSTOFFFOLIEN-BODENBEUTEL**
PLASTIC FILM BOTTOM BAG AND ITS USE AS WELL AS A BLANK FOR A PLASTIC FILM BOTTOM BAG
SAC À FOND EN FILM PLASTIQUE ET SON UTILISATION AINSI QUE DÉCOUPE POUR UN SAC À FOND EN FILM PLASTIQUE

(43) Veröffentlichungstag der Anmeldung: 08.09.2021
(60) Teilanmeldung: 23186178.2
(73) Patentinhaber: Papier-Mettler KG, 54497 Morbach (DE)
(72) Erfinder: DONNER, Georg, 54497 Morbach (DE)
(74) Vertreter: Metten, Karl-Heinz

(56) Entgegenhaltungen:
- WO-A1-01/51372
- WO-A1-2018/091073
- WO-A2-96/10524
- DE-A1- 4 012 897
- DE-A1- 10 116 920
- FR-A- 1 283 386
- JP-U- S5 084 443
- US-A- 3 462 067
- US-B1- 6 334 710

## Beschreibung

Die vorliegende Erfindung betrifft einen wiederverwendbaren Kunststofffolien-Bodenbeutel und deren Verwendung sowie einen Zuschnitt für einen Kunststofffolien-Bodenbeutel.

Tragetaschen, wie sie üblicherweise vom Handel dem Kunden zum Transport von Waren zur Verfügung gestellt werden, sind regelmäßig aus Plastik oder Papier gefertigt. Waren diese Transportbehältnisse bislang vielfach für den einmaligen Gebrauch vorgesehen, werden nunmehr verstärkt geeignete Transportgebinde nachgefragt, die dauerhaft wiederverwendet werden können. Neben Tragetaschen aus Textilmaterialien wird hierfür häufig auch auf recycelfähige Kunststofftragetaschen, typischerweise in Form von Schlaufentaschen, zurückgegriffen. Derartige herkömmliche Schlaufentaschen finden sich beispielsweise in der DE 101 16 920 A1, der WO 01/51372 A1 und der DE 40 12 897 A1 offenbart.

Wiederverwendbare Kunststofftragetaschen sind regelmäßig wesentlich größer dimensioniert als Einwegtragetaschen aus Kunststoff. Dies erfordert eine hinreichende Tragefestigkeit. Denn ansonsten steht bereits der mechanische Verschleiß einer Wiederverwendbarkeit im Wege. Mit größer dimensionierten recycelfähigen Kunststofftragetaschen geht allerdings das Problem der mangelnden Standfestigkeit einher. D.h. erst nachdem man die Kunststofftragetasche bis zu einem gewissen Grad befüllt hat, liegt die Befüllöffnung im Allgemeinen in einem Zustand vor, dass ein Befüllen gelingt, ohne dass die Taschenwände oder die Griffe mit einer Hand gehalten werden müssen.

Aus der US 6,334,710 B1 geht ein selbststehender Beutel hervor, umfassend einen Hauptkörper in Röhrenform, der einen oberen und einen unteren Endabschnitt aufweist, die jeweils geöffnet vorliegen, sowie eine den Boden bildende Folie. Diese Folie ist mit dem unteren Endabschnitt mittels Schmelzkleber verbunden. Auf diese Weise soll ein selbststehender Beutel mit flachem Boden erhalten werden. Hierbei haben der Hauptkörper wie auch die den Boden bildende Folie eine Laminatfolie mit mindestens zwei Schichten zu umfassen. Die Außenschicht und die Innenschicht haben dabei eine Dicke im Bereich von 20 µm bis 120 µm aufzuweisen. Ferner haben die Außenschicht und die Innenschicht aus dem gleichen Material gefertigt zu sein, wobei es sich entweder um Polypropylen oder Polyethylen handelt. Auch offenbart die US 6,334,710 B1 eine Ausführungsform, bei der der Hauptkörper in seinen vier Ecken mit vier schmelzgeklebten säulenförmigen Abschnitten mit einer vorgeschriebenen Breite versehen ist, die durch Schmelzkleben der flachen Flächenelemente mit den Seitenflächenelementen gebildet werden. Der Beutel der US 6,334,710 B1 soll selbst bei relativ geringer Wandungsdicke noch selbststehend sein.

Die WO 2018/091073 A1 betrifft einen faltbaren Beutel, umfassend eine erste Wand und eine zweite Wand, wobei jede Wand begrenzt ist durch eine erste vertikale Kante und eine zweite vertikale Kante, wobei die ersten vertikalen Kanten der Wände und die zweiten vertikalen Kanten der Wände jeweils aneinander befestigt sind, sowie eine obere horizontale Kante und eine untere horizontale Kante, wobei die oberen horizontalen Kanten der Wände zusammen eine Beutelöffnung definieren und wobei die unteren horizontal Kanten der Wände aneinander befestigt sind. Die untere horizontale Kante jeder Wand besitzt einerseits eine erste Ecke mit der ersten vertikalen Kante derselben Wand und andererseits eine zweite Ecke mit der zweiten vertikalen Kante derselben Wand. Der faltbare Beutel zeichnet sich dadurch aus, dass jede Wand mindestens fünf Faltlinien umfasst: eine erste vertikale Faltlinie und eine zweite vertikale Faltlinie, die sich beide von der unteren horizontalen Kante zur oberen horizontalen Kante erstrecken, wobei die erste vertikale Faltlinie sich an der Wand zwischen der ersten vertikalen Kante und der zweiten vertikalen Faltlinie befindet, eine horizontale Faltlinie, die sich zwischen der ersten vertikalen Kante und der zweiten vertikalen Kante erstreckt, eine erste schräge Faltlinie, die sich zwischen der ersten Ecke und einem Schnittpunkt zwischen der ersten vertikalen Faltlinie und der horizontalen Faltlinie erstreckt, und eine zweite schräge Faltlinie, die sich zwischen der zweiten Ecke und einem Schnittpunkt zwischen der zweiten vertikalen Faltlinie und der horizontalen Faltlinie erstreckt. Mit dem faltbaren Beutel der WO 2018/091073 A1 sollen sich auch in gefalteter, flacher Form Gegenstände bequem transportieren lassen, ohne dass sich der Beutel dabei zwangsläufig entfaltet.

Weitere Kunststoffbeutel sind aus JP S50 84443 U, US 3 462 067 A und WO 96/10524 A2 bekannt.

Der vorliegenden Erfindung hat daher die Aufgabe zugrunde gelegen, einen Kunststoffbeutel zur Verfügung zu stellen, der nicht mehr mit den geschilderten Nachteilen des Stands der Technik behaftet ist und der insbesondere ein unbeeinträchtigtes, insbesondere beidhändiges, Befüllen gestattet, vor allem auch schon im unbefüllten Zustand. Insbesondere hat der vorliegenden Erfindung die Aufgabe zugrunde gelegen, einen Kunststoffbeutel verfügbar zu machen, der sich im unbefüllten Zustand in einer Weise aufstellen lässt, dass ein hinreichend großer Öffnungsquerschnitt erhalten wird, der selbstständig aufrechterhalten bleibt.

Demgemäß wurde ein Kunststofffolien-Bodenbeutel gemäß den Merkmalen des Patentanspruchs 1 gefunden.

Ein besonders hohes Maß an Standfestigkeit und an einer konstant weit geöffneten Beutelöffnung wird mit dem erfindungsgemäßen Kunststofffolien-Bodenbeutel dadurch erhalten, dass die erste Kunststofffolienseitenwand mit der ersten Seitenfaltenschweißnaht ausgestattet ist und dass die zweite Kunststofffolienseitenwand mit der zweiten Seitenfaltenschweißnaht ausgestattet ist. Bei dem erfindungsgemäßen Kunststofffolien-Bodenbeutel liegt im Bereich der Seitenfalten von erster und zweiter Kunststofffolienseitenwand jeweils die Seitenfaltenschweißnaht vor.

Im Sinne der vorliegenden Erfindung soll mit dem Begriff Seitenfaltenschweißnaht nicht automatisch zum Ausdruck gebracht werden, dass über diese Schweißnaht die ersten und zweiten Seitenwandabschnitte einer Seitenwand miteinander verbunden werden müssen. Vielmehr können die ersten und zweiten Seitenwandabschnitte auch in einem Stück vorliegen. Hierbei liegt dann im Übergang vom ersten zum zweiten Seitenwandabschnitt die Schweißnaht vor.

Ein im unbefüllten Zustand frei und besonders stabil stehender erfindungsgemäßer Kunststofffolien-Bodenbeutel mit einer dauerhaft hinreichend weit geöffneten Beutelöffnung wird in einer besonders bevorzugten Ausführungsform auch dadurch erhalten, dass die zwischen dem ersten Seitenwandabschnitt und dem zweiten Seitenwandabschnitt der ersten Seitenwand vorliegende erste Seitenfaltenschweißnaht einen nach außen gewandten Seitenfaltenschweißsaum darstellt oder dass die zwischen dem ersten Seitenwandabschnitt und dem zweiten Seitenwandabschnitt der zweiten Seitenwand vorliegende zweite Seitenfaltenschweißnaht einen nach außen gewandten Seitenfaltenschweißsaum darstellt. Besonders gute Resultate werden dadurch erhalten, dass sowohl die erste wie auch die zweite Seitenfaltenschweißnaht jeweils einen nach außen gewandten Seitenfaltenschweißsaum darstellen. Dieser Schweißsaum verfügt in besonders geeigneten Ausgestaltungen über eine durchschnittliche Breite im Bereich von 1,0 bis 4,0 mm, bevorzugt im Bereich von 1,5 bis 3,5 mm.

Die der Erfindung zugrunde liegende Aufgabe wird auch besonders gut durch solche erfindungsgemäßen Kunststofffolien-Bodenbeutel gelöst, bei denen im Übergang von der Kunststofffolienvorderwand zum ersten Seitenwandabschnitt der ersten Kunststofffolienseitenwand eine Falte, insbesondere Falz, vorliegt oder bei denen im Übergang von der Kunststofffolienvorderwand zum ersten Seitenwandabschnitt der zweiten Kunststofffolienseitenwand eine Falte, insbesondere Falz, vorliegt oder bei denen im Übergang von der Kunststofffolienrückwand zum zweiten Seitenwandabschnitt der ersten Kunststofffolienseitenwand eine Falte, insbesondere Falz, vorliegt oder bei denen im Übergang von der Kunststofffolienrückwand zum zweiten Seitenwandabschnitt der zweiten Kunststofffolienseitenwand eine Falte, insbesondere Falz, vorliegt. Hierbei sind solche Ausgestaltungen besonders bevorzugt, bei denen im Übergang von der Kunststofffolienvorderwand zum ersten Seitenwandabschnitt der ersten Kunststofffolienseitenwand eine Falte, insbesondere Falz, vorliegt, bei denen ferner im Übergang von der Kunststofffolienvorderwand zum ersten Seitenwandabschnitt der zweiten Kunststofffolienseitenwand eine Falte, insbesondere Falz, vorliegt, bei denen außerdem im Übergang von der Kunststofffolienrückwand zum zweiten Seitenwandabschnitt der ersten Kunststofffolienseitenwand eine Falte, insbesondere Falz, vorliegt und bei denen im Übergang von der Kunststofffolienrückwand zum zweiten Seitenwandabschnitt der zweiten Kunststofffolienseitenwand eine Falte, insbesondere Falz, vorliegt.

Die der Erfindung zugrunde liegende Aufgabe wird besonders vorteilhaft auch durch solche erfindungsgemäßen Kunststofffolien-Bodenbeutel gelöst, bei denen im Übergang von der Kunststofffolienvorderwand zum ersten Seitenwandabschnitt der ersten Kunststofffolienseitenwand entlang und im Bereich der Falte, insbesondere Falz, die Kunststofffolienvorderwand und der erste Seitenwandabschnitt der ersten Kunststofffolienseitenwand miteinander verschweißt vorliegen unter Ausbildung eines Saums oder Hohlsaums, oder bei denen im Übergang von der Kunststofffolienvorderwand zum ersten Seitenwandabschnitt der zweiten Kunststofffolienseitenwand entlang und im Bereich der Falte, insbesondere Falz, die Kunststofffolienvorderwand und der zweite Seitenwandabschnitt der ersten Kunststofffolienseitenwand miteinander verschweißt vorliegen unter Ausbildung eines Saums oder Hohlsaums, oder bei denen im Übergang von der Kunststofffolienrückwand zum zweiten Seitenwandabschnitt der ersten Kunststofffolienseitenwand entlang und im Bereich der Falte, insbesondere Falz, die Kunststofffolienrückwand und der zweite Seitenwandabschnitt der ersten Kunststofffolienseitenwand miteinander verschweißt vorliegen unter Ausbildung eines Saums oder Hohlsaums, oder bei denen im Übergang von der Kunststofffolienrückwand zum zweiten Seitenwandabschnitt der zweiten Kunststofffolienseitenwand entlang und im Bereich der Falte, insbesondere Falz, die Kunststofffolienrückwand und der zweite Seitenwandabschnitt der zweiten Kunststofffolienseitenwand miteinander vorliegen unter Ausbildung eines Saums oder Hohlsaums (diese Ausführungsform wird auch als weitere Ausführungsvariante des erfindungsgemäßen Kunststofffolien-Bodenbeutels bezeichnet). Hierbei sind solche Ausführungsformen ganz besonders geeignet, bei denen im Übergang von der Kunststofffolienvorderwand zum ersten Seitenwandabschnitt der ersten Kunststofffolienseitenwand entlang und im Bereich der Falte, insbesondere Falz, die Kunststofffolienvorderwand und der erste Seitenwandabschnitt der ersten Kunststofffolienseitenwand miteinander verschweißt vorliegen, und bei denen im Übergang von der Kunststofffolienvorderwand zum ersten Seitenwandabschnitt der zweiten Kunststofffolienseitenwand entlang und im Bereich der Falte, insbesondere Falz, die Kunststofffolienvorderwand und der zweite Seitenwandabschnitt der ersten Kunststofffolienseitenwand miteinander verschweißt vorliegen, und/oder, insbesondere und, bei denen im Übergang von der Kunststofffolienrückwand zum zweiten Seitenwandabschnitt der ersten Kunststofffolienseitenwand entlang und im Bereich der Falte, insbesondere Falz, die Kunststofffolienrückwand und der zweite Seitenwandabschnitt der ersten Kunststofffolienseitenwand miteinander verschweißt vorliegen, und bei denen im Übergang von der Kunststofffolienrückwand zum zweiten Seitenwandabschnitt der zweiten Kunststofffolienseitenwand entlang und im Bereich der Falte, insbesondere Falz, die Kunststofffolienrückwand und der zweite Seitenwandabschnitt der zweiten Kunststofffolienseitenwand miteinander verschweißt vorliegen.

Im Sinne der Erfindung liegt ein Falz vor, wenn dieser mithilfe eines hierfür vorgesehenen Werkzeugs oder einer hierfür vorgesehenen Maschine erzeugt worden ist. Derartige maschinell erzeugte Falze sind regelmäßig in Form einer Knickkante ausgebildet. Wird eine solche Knickkante ohne die mithilfe eines Werkzeugs erzeugt, soll hierunter im Sinne der Erfindung eine Falte verstanden werden.

Eine ganz besonders gute Standfestigkeit sowie eine äußerst zuverlässige Zurverfügungstellung einer zur Befüllung geeigneten Beutelöffnung eines freistehenden erfindungsgemäßen Kunststofffolien-Bodenbeutels lässt sich überraschend erzielen, wenn dafür Sorge getragen wird, dass die Kunststofffolienvorderwand im Bereich des Beutelöffnungsrands innen- und/oder außenseitig einen ein- oder mehrlagigen Folienstreifen aufweist oder dass die Kunststofffolienrückwand im Bereich des Beutelöffnungsrands innen- und/oder außenseitig einen ein- oder mehrlagigen Folienstreifen aufweist oder dass die erste Kunststofffolienseitenwand im Bereich des Beutelöffnungsrands innen- und/oder außenseitig einen ein- oder mehrlagigen Folienstreifen aufweist oder dass die zweite Kunststofffolienseitenwand im Bereich des Beutelöffnungsrands innen- und/oder außenseitig einen ein- oder mehrlagigen Folienstreifen aufweist. Hierbei sind solche Ausführungsformen besonders bevorzugt, bei denen die Kunststofffolienvorderwand im Bereich des Beutelöffnungsrands innen- und/oder außenseitig, insbesondere innenseitig, einen ein- oder mehrlagigen Folienstreifen aufweist und die Kunststofffolienrückwand im Bereich des Beutelöffnungsrands innen- und/oder außenseitig, insbesondere innenseitig, einen ein- oder mehrlagigen Folienstreifen aufweist. Ganz besonders bevorzugt sind hierbei derartige Ausführungsformen, bei denen die Kunststofffolienvorderwand im Bereich des Beutelöffnungsrands innen- und/oder außenseitig, insbesondere innenseitig, einen ein- oder mehrlagigen Folienstreifen aufweist, die Kunststofffolienrückwand im Bereich des Beutelöffnungsrands innen- und/oder außenseitig, insbesondere innenseitig, einen ein- oder mehrlagigen Folienstreifen aufweist, die erste Kunststofffolienseitenwand im Bereich des Beutelöffnungsrands innen- und/oder außenseitig, insbesondere innenseitig, einen ein- oder mehrlagigen Folienstreifen aufweist und die zweite Kunststofffolienseitenwand im Bereich des Beutelöffnungsrands innen- und/oder außenseitig, insbesondere innenseitig, einen ein- oder mehrlagigen Folienstreifen aufweist.

Dabei stellt der ein- oder mehrlagige Folienstreifen, insbesondere als Bestandteil der Kunststofffolienvorderwand, der Kunststofffolienrückwand, der ersten Kunststofffolienseitenwand und/oder der zweiten Kunststofffolienseitenwand, im Allgemeinen einen Öffnungsrandsaum dar. Dabei können die Folienstreifen besonders zweckmäßig jeweils auch einstückig mit der Kunststofffolienvorderwand, der Kunststofffolienrückwand, der ersten Kunststofffolienseitenwand bzw. der zweiten Kunststofffolienseitenwand ausgebildet sein.

Demgemäß kann der Öffnungsrand in einer Ausführungsform durch eine Faltung am oberen Ende der Kunststofffolienvorderwand oder der Kunststofffolienrückwand gebildet werden. Kommt beispielsweise eine mehrlagige Kunststofffolienvorderwand oder Kunststofffolienrückwand zum Einsatz, kann der ein- oder mehrlagige Folienstreifen durch Umschlagen einer oder mehrerer Lagen dieses mehrlagigen Systems erhalten werden.

Für viele Anwendungen hat es sich besonders zweckmäßig erwiesen, für den erfindungsgemäßen Kunststofffolien-Bodenbeutel auf ein ein- oder mehrlagiges Folienmaterial für die Kunststofffolienvorderwand und/oder Kunststofffolienrückwand zurückzugreifen. Geeignete Kunststoffmaterialien stellen hierbei Polyolefine, bevorzugt Polyethylen und/oder Polypropylen, besonders bevorzugt HD-Polyethylen, dar.

In einer Ausführungsform kann der erfindungsgemäße Kunststofffolien-Bodenbeutel im Wesentlichen einstückig ausgebildet sein.

In einer weiteren, besonders zweckmäßigen Ausführungsform können die Kunststofffolienvorderwand, der Kunststofffolienbeutelboden und die Kunststofffolienrückwand zusammenhängend, bevorzugt ohne Verbindungsnaht und besonders bevorzugt einstückig vorliegen.

In einer weiteren, ebenfalls besonders zweckmäßigen Ausführungsform können die Kunststofffolienvorderwand, der erste Seitenwandabschnitt der ersten Kunststofffolienseitenwand und der erste Seitenwandabschnitt der zweiten Kunststofffolienseitenwand zusammenhängend, bevorzugt ohne Verbindungsnaht und besonders bevorzugt einstückig vorliegen.

Und in einer weiteren, ebenfalls besonders zweckmäßigen Ausführungsform können zusätzlich oder alternativ die Kunststofffolienrückwand, der zweite Seitenwandabschnitt der ersten Kunststofffolienseitenwand und der zweite Seitenwandabschnitt der zweiten Kunststofffolienseitenwand zusammenhängend, bevorzugt ohne Verbindungsnaht und besonders bevorzugt einstückig vorliegen.

Unter Verwendung der vorangehend beschriebenen besonders zweckmäßigen Ausführungsformen kann der erfindungsgemäße Kunststofffolien-Bodenbeutel in einer Weise gefertigt werden, dass im Bereich der ersten Seitenfaltenschweißnaht die die erste Seitenwand bildenden ersten und einen zweiten Seitenwandabschnitte miteinander verbunden werden und dass im Bereich der zweiten Seitenfaltenschweißnaht die die zweite Seitenwand bildenden ersten und zweiten Seitenwandabschnitte miteinander verbunden werden.

Ein erfindungsgemäßer Kunststofffolien-Bodenbeutel zeichnet sich demgemäß in einer Ausführungsform auch dadurch aus, dass dieser neben der ersten und zweiten Seitenfaltenschweißnaht im Bereich der Kunststofffolienvorderwand, der Kunststofffolienrückwand, der ersten Kunststofffolienseitenwand und der zweiten Kunststofffolienseitenwand, insbesondere einschließlich der jeweiligen Übergänge, keine weitere sich vom oder beabstandet vom Beutelöffnungsrand in Richtung des Beutelendes oder bis zum Beutelende erstreckende Schweißnaht aufweist.

Ferner kann für die erfindungsgemäßen Kunststofffolien-Bodenbeutel vorgesehen sein, dass im Übergang von der Kunststofffolienvorderwand zum Kunststofffolienbeutelboden eine Falte oder ein Falz (auch erste Bodenfalte bzw. Bodenfalz genannt) und/oder dass im Übergang von der Kunststofffolienvorderwand zum Kunststofffolienbeutelboden entlang und im Bereich der Falte oder Falz die Kunststofffolienvorderwand und der Kunststofffolienbeutelboden miteinander verschweißt vorliegen unter Ausbildung eines Saums oder Hohlsaums. Ferner kann alternativ oder insbesondere zusätzlich vorgesehen sein, dass im Übergang von der Kunststofffolienrückwand zum Kunststofffolienbeutelboden eine Falte oder Falz (auch zweite Bodenfalte oder -falz genannt) vorliegt und/oder dass im Übergang von der Kunststofffolienrückwand zum Kunststofffolienbeutelboden entlang und im Bereich der Falte oder Falz die Kunststofffolienrückwand und der Kunststofffolienbeutelboden miteinander verschweißt vorliegen unter Ausbildung eines Saums oder Hohlsaums. Auch kann der Kunststofffolienbeutelboden eine Mittelfalz aufweisen, die sich beabstandet vom oder vom ersten Seitenrand in Richtung des oder bis zum gegenüberliegenden zweiten Seitenrand erstreckt.

Eine besonders ausgeprägte Standfestigkeit lässt sich auch mit solchen Kunststofffolien-Bodenbeutel erhalten, bei denen
im Übergang von der ersten Kunststofffolienseitenwand zum Kunststofffolienbeutelboden eine Falte oder Falz (auch dritte Bodenfalte oder -falz genannt) vorliegt oder bei denen im Übergang von der ersten Kunststofffolienseitenwand zum Kunststofffolienbeutelboden entlang und im Bereich der Falte oder Falz die erste Kunststofffolienseitenwand und der Kunststofffolienbeutelboden miteinander verschweißt vorliegen unter Ausbildung eines Saums oder Hohlsaums. Ferner kann alternativ oder insbesondere zusätzlich vorgesehen sein, dass im Übergang von der zweiten Kunststofffolienseitenwand zum Kunststofffolienbeutelboden eine Falte oder Falz (auch vierte Bodenfalte oder -falz genannt) vorliegt oder bei denen im Übergang von der zweiten Kunststofffolienseitenwand zum Kunststofffolienbeutelboden entlang und im Bereich der Falte oder Falz die zweite Kunststofffolienseitenwand und der Kunststofffolienbeutelboden miteinander verschweißt vorliegen unter Ausbildung eines Saums oder Hohlsaums.

Die erfindungsgemäßen Kunststofffolien-Bodenbeutel zeichnen sich auch dadurch aus, dass bei diesen sich von einem ersten Mündungspunkt, bei dem der erste Bodenfalz in den ersten Seitenrand der Kunststofffolienvorderwand mündet, und der beabstandet von dem Kunststofffolienbeutelboden endenden ersten Seitenfaltenschweißnaht eine erste Schweißnaht erstreckt und dass
sich von einem zweiten Mündungspunkt, bei dem der zweite Bodenfalz in den ersten Seitenrand der Kunststofffolienrückwand mündet, und der beabstandet von dem Kunststofffolienbeutelboden endenden ersten Seitenfaltenschweißnaht eine zweite Schweißnaht erstreckt und/oder dass
sich von einem dritten Mündungspunkt, bei dem der erste Bodenfalz in den zweiten Seitenrand der Kunststofffolienvorderwand mündet, und
der beabstandet von dem Kunststofffolienbeutelboden endenden zweiten Seitenfaltenschweißnaht eine dritte Schweißnaht erstreckt und dass
sich von einem vierten Mündungspunkt, bei dem der zweite Bodenfalz in den zweiten Seitenrand der Kunststofffolienrückwand mündet, und der beabstandet von dem Kunststofffolienbeutelboden endenden zweiten Seitenfaltenschweißnaht eine vierte Schweißnaht erstreckt. Hierbei weisen die erste Seitenfaltenschweißnaht, die erste Schweißnaht und die zweite Schweißnaht vorzugsweise einen gemeinsamen Mündungsbereich auf. Alternativ und insbesondere zusätzlich weisen auch die zweite Seitenfaltenschweißnaht, die dritte Schweißnaht und die vierte Schweißnaht einen gemeinsamen Mündungsbereich auf.

In einer besonders gut die der Erfindung zugrunde liegende Aufgabe lösenden Ausführungsform des erfindungsgemäßen Kunststofffolien-Bodenbeutels ist vorgesehen, dass die erste Seitenfaltenschweißnaht und die zweite Seitenfaltenschweißnaht sich bis zum Beutelende erstrecken, insbesondere nicht mit dem Kunststofffolienbeutelboden verklebt oder verschweißt sind, dass sich von einem ersten Mündungspunkt, bei dem der erste Bodenfalz in den ersten Seitenrand der Kunststofffolienvorderwand mündet, und der ersten Seitenfaltenschweißnaht, beabstandet von dem Kunststofffolienbeutelboden, eine erste Schweißnaht erstreckt und dass sich von einem zweiten Mündungspunkt, bei dem der zweite Bodenfalz in den ersten Seitenrand der Kunststofffolienrückwand mündet, und der ersten Seitenfaltenschweißnaht beabstandet von dem Kunststofffolienbeutelboden eine zweite Schweißnaht erstreckt und/oder, insbesondere und, dass sich von einem dritten Mündungspunkt, bei dem der erste Bodenfalz in den zweiten Seitenrand der Kunststofffolienvorderwand mündet, und der zweiten Seitenfaltenschweißnaht beabstandet von dem Kunststofffolienbeutelboden eine dritte Schweißnaht erstreckt und dass sich von einem vierten Mündungspunkt, bei dem der zweite Bodenfalz in den zweiten Seitenrand der Kunststofffolienrückwand mündet, und der zweiten Seitenfaltenschweißnaht beabstandet von dem Kunststofffolienbeutelboden eine vierte Schweißnaht erstreckt.

Hierbei weisen die erste Seitenfaltenschweißnaht, die erste Schweißnaht und die zweite Schweißnaht vorzugsweise einen gemeinsamen ersten Mündungsbereich auf. Alternativ und insbesondere zusätzlich weisen auch die zweite Seitenfaltenschweißnaht, die dritte Schweißnaht und die vierte Schweißnaht einen gemeinsamen zweiten Mündungsbereich auf.

Insbesondere solche Ausführungsformen des erfindungsgemäßen Kunststofffolien-Bodenbeutels sind besonders gut geeignet, die der Erfindung zugrunde liegende Aufgabe zu lösen, bei denen in dem Areal, das sich zwischen dem ersten Mündungspunkt, bei dem der erste Bodenfalz in den ersten Seitenrand der Kunststofffolienvorderwand mündet, und dem zweiten Mündungspunkt, bei dem der zweite Bodenfalz in den ersten Seitenrand der Kunststofffolienrückwand mündet, und dem ersten Mündungsbereich aufspannt, zwei dreieckförmige Kunststofffolienabschnitte benachbart vorliegen, insbesondere aneinander anliegen, und/oder, insbesondere und, bei denen in dem Areal, das sich zwischen dem dritten Mündungspunkt, bei dem der erste Bodenfalz in den zweiten Seitenrand der Kunststofffolienvorderwand mündet, und dem vierten Mündungspunkt, bei dem der zweite Bodenfalz in den zweiten Seitenrand der Kunststofffolienrückwand mündet, und dem zweiten Mündungsbereich aufspannt, zwei dreieckförmige Kunststofffolienabschnitte benachbart vorliegen, insbesondere aneinander anliegen. Hierdurch wird ein besonders hohes Maß an Standstabilität erhalten.

Die erfindungsgemäßen Kunststofffolien-Bodenbeutel sind bevorzugt auch mindestens einem ersten Trageelement und/oder mindestens einem zweiten Trageelemente ausgestattet. Hierbei kann es sich um ein Griffloch, eine Halteschlaufe oder einen Haltegriff handeln. Die Halteschlaufe oder der Haltegriff sind dabei bevorzugt an oder benachbart zur Beutelöffnung an der Kunststofffolienvorderwand und/oder an der Kunststofffolienrückwand angebracht bzw. befestigt.

Demgemäß können zweckmäßigerweise das erste Trageelement bzw. dessen Anbindungsabschnitte im Bereich des ein- oder mehrlagige Folienstreifens, insbesondere Öffnungsrandsaums, der Kunststofffolienvorderwand befestigt sein oder vorliegen und das zweite Trageelement bzw. dessen Anbindungsabschnitte im Bereich des ein- oder mehrlagige Folienstreifens, insbesondere Öffnungsrandsaums, der Kunststofffolienrückwand befestigt sein oder vorliegen.

Mit der vorangehend geschilderten erfindungsgemäßen Ausführungsform einer Kunststofftragetasche wird neben einem hervorragenden Tragekomfort auch eine verbesserte mechanische Belastbarkeit insbesondere von wiederverwendbaren Kunststofftragetasche sichergestellt. Sowohl die Halteschlaufe als solche wie auch deren Anbindung an den Korpus der Kunststofftragetasche zeichnen sich durch eine besondere Reißfestigkeit aus.

Durch die Kombination der Merkmale, die den Verstärkungsbereich ausbilden, mit den Merkmalen der Halteschlaufe wird eine besonders robuste und belastbare Kunststofftragetasche erhalten.

Des Weiteren sind unter den erfindungsgemäßen Kunststofffolien-Bodenbeuteln solche besonders geeignet die der Erfindung zugrunde liegende Aufgabe zu lösen, bei denen die mindestens eine Lage einer mehrlagigen Vorder- und/oder Rückwand, insbesondere die Innenlage, eine geschäumte Kunststofffolie, vorzugsweise eine geschäumte Polyolefinfolie, besonders bevorzugt eine geschäumte Polyethylenfolie und insbesondere eine geschäumte LD-Polyethylenfolie, umfasst oder darstellt. Hierdurch kann eine textilartige Anmutung in der Handhabung, beispielsweise beim Zusammenfalten, der erfindungsgemäßen Kunststofftragetasche verstärkt werden.

Darüber hinaus hat sich überraschend gezeigt, dass sich ein besonders einwandfreies Aufstellen der erfindungsgemäßen Kunststofffolien-Bodenbeutel auch dadurch einstellt, dass der Kunststofffolienbeutelboden ein, insbesondere auf der Außenseite angebrachtes, Prägeschweißmuster aufweist. Dieses Prägeschweißmuster kann dabei zum Beispiel in Form einer Wabenstruktur, Linienstruktur oder Ringstruktur ausgebildet sein. Selbstverständlich sind auch weitere, insbesondere geometrische, Prägemuster möglich. Für viele Anwendungen hat sich die Verwendung einer Wabenstruktur als besonders geeignet erwiesen.

Alternativ oder zusätzlich können die erfindungsgemäßen Kunststofffolien-Bodenbeutel auch mit einem Einlegeboden ausgestattet sein. Hierbei wird bevorzugt auf solche Einlegeboden zurückgegriffen, die steifer ausgestaltet sind als der Kunststofffolienbeutelboden.

Durch die Verwendung eines, zweckmäßigerweise herausnehmbaren, insbesondere losen, Einlegebodens kann ebenfalls die Standfestigkeit der erfindungsgemäßen Kunststofffolien-Bodenbeutel erhöht werden. Auch gelingt bei Verwendung von Einlegeböden ein besonders zuverlässiges Offenhalten des noch unbefüllten Kunststofffolien-Bodenbeutels. Der Einlegeboden kann zum Beispiel aus LD-Polyethylen, HD- Polyethylen oder Polypropylen gefertigt sein.

Außerdem wird die der Erfindung zugrunde liegende Aufgabe gelöst durch einen Zuschnitt für einen erfindungsgemäßen Kunststofffolien-Bodenbeutel aus einer ein- oder mehrlagigen Kunststofffolie mit einem Kunststofffolienvorderwandabschnitt, einem sich hieran entlang einem ersten Bodenseitenrand, insbesondere einstückig, anschließenden im Wesentlichen rechteckigen oder quadratischen Kunststofffolienbeutelbodenabschnitt und einem sich an diesen, gegenüberliegend zum Kunststofffolienvorderwandabschnitt, entlang einem zweiten Bodenseitenrand, insbesondere einstückig, anschließenden Kunststofffolienrückwandabschnitt, wobei sich an die gegenüberliegenden Bodenseitenränder des Kunststofffolienbeutelbodenabschnitts, die nicht mit dem Kunststofffolienvorderwandabschnitt und dem Kunststofffolienrückwandabschnitt verbunden sind (auch dritte und vierte Bodenseitenränder genannt), jeweils dreieckförmige oder trapezförmige Abschnitte, insbesondere einstückig, anschließen, wobei der Kunststofffolienvorderwandabschnitt, an einander gegenüberliegenden Seitenrandverläufen, insbesondere einstückig, jeweils einen Erstreckungsabschnitt, mit einem geneigten bodenseitigen Rand aufweist, der bei Anordnung des Zuschnitts in einer Ebene mit dem ersten Bodenseitenrand einem stumpfen Winkel (α) bildet, wobei der Abstand der gegenüberliegenden Seitenrandverläufen des Kunststofffolienvorderwandabschnitts im Wesentlichen dem Abstand zwischen dem dritten und vierten Bodenseitenrand entspricht und wobei der Kunststofffolienrückwandabschnitt, an einander gegenüberliegenden Seitenrandverläufen, insbesondere einstückig, jeweils einen Erstreckungsabschnitt, mit einem geneigten bodenseitigen Rand aufweist, der bei Anordnung des Zuschnitts in einer Ebene mit dem zweiten Bodenseitenrand einem stumpfen Winkel (α')^{,} bildet, wobei der Abstand der gegenüberliegenden Seitenrandverläufen des Kunststofffolienrückwandabschnitts im Wesentlichen dem Abstand zwischen dem dritten und vierten Bodenseitenrand entspricht.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigen
- Figur 1: eine schematische perspektivische Seitenansicht einer Ausführungsform eines erfindungsgemäßen Kunststofffolien-Bodenbeutels,
- Figur 2: eine schematische perspektivische Draufsicht auf die Ausführungsform des Kunststofffolien-Bodenbeutels gemäß Figur 1,
- Figur 3: eine schematische perspektivische Seitenansicht der weiteren Ausführungsvariante eines erfindungsgemäßen Kunststofffolien-Bodenbeutels,
- Figur 4: eine schematische perspektivische Draufsicht auf die Ausführungsform des Kunststofffolien-Bodenbeutels gemäß Figur 3,
- Figur 5: eine schematische perspektivische Seitenansicht einer bevorzugten Ausgestaltung der weiteren Ausführungsvariante eines erfindungsgemäßen Kunststofffolien-Bodenbeutels,
- Figur 6: eine schematische perspektivische Draufsicht auf einen Folienzuschnitt für einen erfindungsgemäßen Kunststofffolien-Bodenbeutel gemäß Figur 1,
- Figur 7: eine schematische perspektivische Seitenansicht einer weiteren Ausführungsform der weiteren Ausführungsvariante eines erfindungsgemäßen Kunststofffolien-Bodenbeutels,
- Figur 8: eine schematische perspektivische Draufsicht auf eine weitere Ausführungsform eines Folienzuschnitts für einen erfindungsgemäßen Kunststofffolien-Bodenbeutel gemäß Figur 7,
- Figur 9: eine schematische perspektivische Draufsicht auf die Unterseite des erfindungsgemäßen Kunststofffolien-Bodenbeutels gemäß Figur 7,
- Figur 10: eine schematische perspektivische Draufsicht auf die Unterseite eines erfindungsgemäßen Kunststofffolien-Bodenbeutels und
- Figur 11: eine schematische perspektivische Draufsicht auf eine weitere Ausführungsform eines Folienzuschnitts gemäß Figur 8.

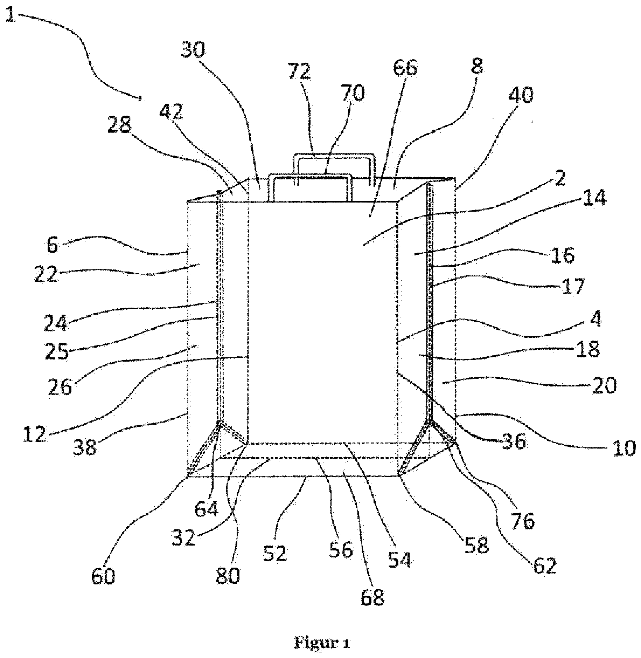

Die Figur 1 zeigt einen erfindungsgemäßen Kunststofffolien-Bodenbeutel (1) mit einer Beutelöffnung (30) und einem gegenüberliegenden Beutelende (32), einer Kunststofffolienvorderwand (2) mit einem Beutelöffnungsrand sowie einem ersten Seitenrand (4) und einem gegenüberliegenden zweiten Seitenrand (6) und einer Kunststofffolienrückwand (8) mit einem Beutelöffnungsrand sowie mit einem ersten Seitenrand (10) und einem gegenüberliegenden zweiten Seitenrand (12). Dieser Kunststofffolien-Bodenbeutels (1) ist ferner mit einer ersten Kunststofffolienseitenwand (14) mit einem Beutelöffnungsrand sowie mit einer zweiten Kunststofffolienseitenwand (22) mit einem Beutelöffnungsrand ausgestattet. Die erste Kunststofffolienseitenwand (14) verfügt über eine sich von dem Beutelöffnungsrand bis nahezu zum Beutelende (32) erstreckende erste Seitenfaltenschweißnaht (16). In der dargestellten Ausführungsform liegt die erste Seitenfaltenschweißnaht (16) als ein nach außen gewandter Seitenfaltenschweißnahtsaum (17) vor. Sowohl die Orientierung der ersten Seitenfaltenschweißnaht (16) nach außen, d. h. vom Tascheninneren weg gewandt, wie auch die Ausbildung der Schweißnaht als Saum tragen kombiniert zu einer besonders ausgeprägten Standfestigkeit der erfindungsgemäßen Kunststofffolien-Bodenbeutels bei. Der Schweißsaum kann hierbei zum Beispiel über eine durchschnittliche Breite im Bereich von 1,5 bis 3,5 mm verfügen. Diesseits und jenseits dieser ersten Seitenfaltenschweißnaht (16) liegen ein erster und ein zweiter Seitenwandabschnitt (18, 20) vor, die sich jeweils von der ersten Seitenfaltenschweißnaht (16) bis zum ersten Seitenrand (4, 10) der Kunststofffolienvorderwand (2) bzw. der Kunststofffolienrückwand (8) erstrecken. In gleicher Weise verfügt die zweite Kunststofffolienseitenwand (22) über eine sich von dem Beutelöffnungsrand bis zum Beutelende (32) erstreckende zweite Seitenfaltenschweißnaht (24), wobei diesseits und jenseits dieser zweiten Seitenfaltenschweißnaht (24) ein erster und ein zweiter Seitenwandabschnitt (26, 28) vorliegen, die sich jeweils von dieser zweiten Seitenfaltenschweißnaht (24) bis zum zweiten Seitenrand (6, 12) der Kunststofffolienvorderwand (2) bzw. der Kunststofffolienrückwand (8) erstrecken. In entsprechender Weise ist bei der dargestellten Ausführungsform auch die zweite Seitenfaltenschweißnaht (24) als ein nach außen gewandter Seitenfaltenschweißnahtsaum (25) ausgebildet. Am Beutelende (32) liegt ein Kunststofffolienbeutelboden (68) vor, der im Übergang zur Vorderwand (2) über eine erste Bodenfalz (52) und Übergang zur Rückwand (8) über eine zweite Bodenfalz (54) verfügt. An der Kunststofffolienvorderwand (2) ist eine erste Trageschlaufe (70) und an der Kunststofffolienrückwand (8) ist eine zweite Trageschlaufe (72) angebracht. Diese Trageschlaufen können zum Beispiel jeweils in Form eines Hohlschlauches, insbesondere eines doppellagigen Hohlschlauches ausgebildet sein. Die Trageschlaufen sind vorzugsweise innenseitig an der Kunststofffolienvorderwand (2) und der Kunststofffolienrückwand (8) angebracht. Die in Figur 1 wiedergegebene Ausführungsform eines erfindungsgemäßen Kunststofffolien-Bodenbeutels (1) verfügt im Übergang von der Kunststofffolienvorderwand (2) zu den ersten und zweiten Kunststofffolienseitenwänden (14, 22) über Falze (36, 38). In entsprechender Weise verfügt der erfindungsgemäße Kunststofffolien-Bodenbeutel (1) im Übergang von der Kunststofffolienrückwand (2) zu den ersten und zweiten Kunststofffolienseitenwänden (14, 22) über Falze (40,42). Der erfindungsgemäße Kunststofffolien-Bodenbeutel (1) kann darüber hinaus mit einer Mittelfalte bzw. einem Mittelfalz (56) im Kunststofffolienbeutelboden (68) ausgestattet sein. Hierdurch gelingt regelmäßig eine leichtere Faltung im verpackten Zustand. Herstellungstechnisch hat es sich vielfach als besonders zweckmäßig erwiesen, den Kunststofffolienbeutelboden (68) an den Schmalseiten jeweils um dreieckförmige Elemente, vorzugsweise einstückig, zu ergänzen, aufgespannt zwischen den Mündungs- bzw. Eckpunkten (58,62, 76) bzw. den Mündungs- bzw. Eckpunkten (60, 64,80). Bei dieser Ausgestaltung findet eine Verbindung mit dem ersten Seitenwandabschnitt (18) der ersten Seitenwand (14) entlang der Schweißnaht zwischen den Mündungs- bzw. Eckpunkten (58) und (62) und eine Verbindung mit dem zweiten Seitenwandabschnitt (20) der ersten Seitenwand (14) entlang der Schweißnaht zwischen den Mündungs- bzw. Eckpunkten (62) und (ηb) statt. In entsprechender Weise liegt eine Verbindung des ersten Seitenwandabschnitts (26) der zweiten Seitenwand (22) entlang der Schweißnaht zwischen den Mündungs- bzw. Eckpunkten (60) und (64) und eine Verbindung des zweiten Seitenwandabschnitts (28) der zweiten Seitenwand (22) entlang der Schweißnaht zwischen den Mündungs- bzw. Eckpunkten (64) und (80) vor. Die Seitenfaltenschweißnähte (16, 24) können sich dabei zum Beispiel bis zu den Eck- bzw. Mündungspunkten (62) bzw. (64) der Schweißnähte (63) und (65) bzw. (67) und (69) erstrecken. Auch hat es sich vielfach als zweckmäßig erwiesen, die im Kunststofffolienbeutelboden (68) vorliegende Mittelfalte bzw. einem Mittelfalz (56) über den Kunststofffolienbeutelboden (68) hinaus in den an den Schmalseiten sich jeweils anschließenden dreieckförmigen Elementen bis zu den Eck- bzw. Mündungspunkten (62) bzw. (64) fortzusetzen (siehe gestrichelte Linien).

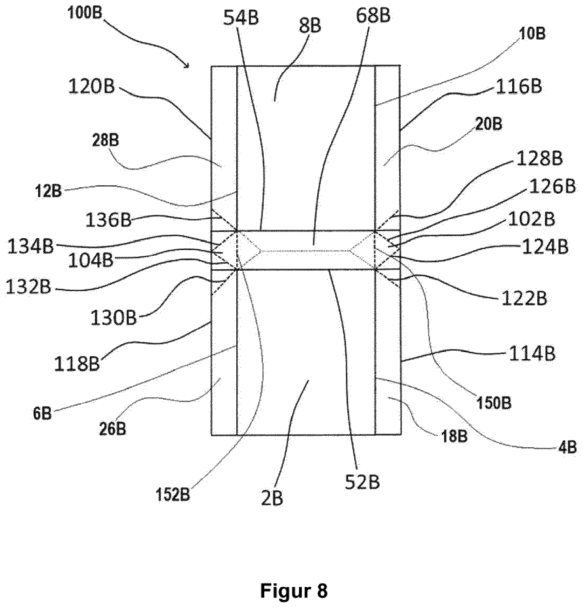

Details zur Herstellung der Schweißnähte (63) und (65) bzw. (67) und (69) finden sich im Zusammenhang mit der Beschreibung des Zuschnitts gemäß Figur 8 beschrieben.

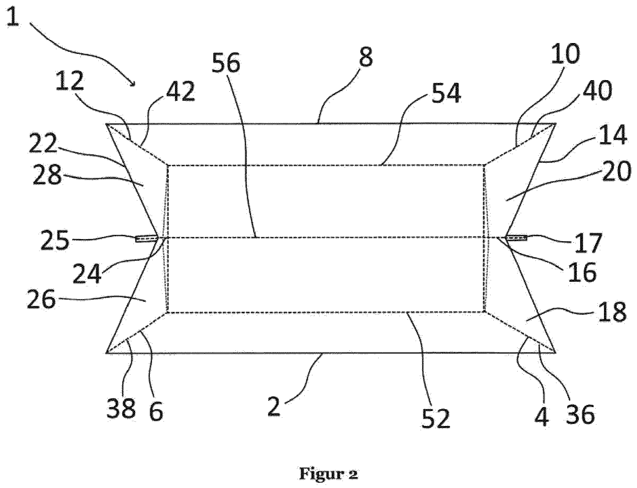

Die perspektivische Draufsicht des erfindungsgemäßen Kunststofffolien-Bodenbeutels (1) der Figur 1, wie in Figur 2 wiedergegebenen, lässt insbesondere auch die Struktur der ersten und zweiten Seitenwände (14, 22) erkennen. Die erste Seitenfaltenschweißnaht (16) ist dabei als ein nach außen gewandter Seitenfaltenschweißnahtsaum (17) ausgebildet. In entsprechender Weise ist die zweite Seitenfaltenschweißnaht (24) als ein nach außen gewandter Seitenfaltenschweißnahtsaum (25) ausgebildet. Figur 2 macht deutlich, wie auch großformatige erfindungsgemäße Kunststofffolien-Bodenbeutel (1), ohne befüllt zu sein, freistehend einen einwandfreien Öffnungsquerschnitt liefern, der ein sofortiges ungehindertes beidhändiges Befüllen gestattet. Es muss keine Hand zur Hilfe genommen werden, um die Beutelöffnung zunächst offenzuhalten.

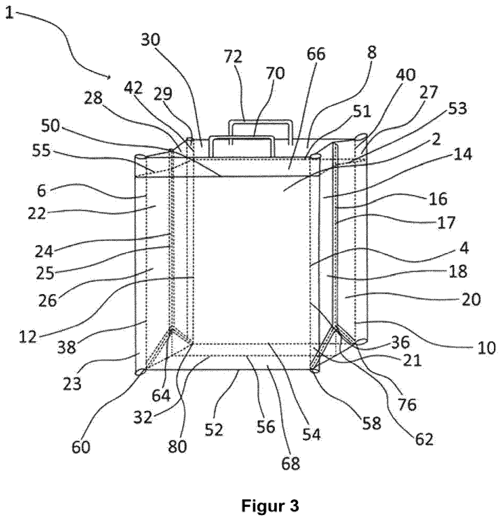

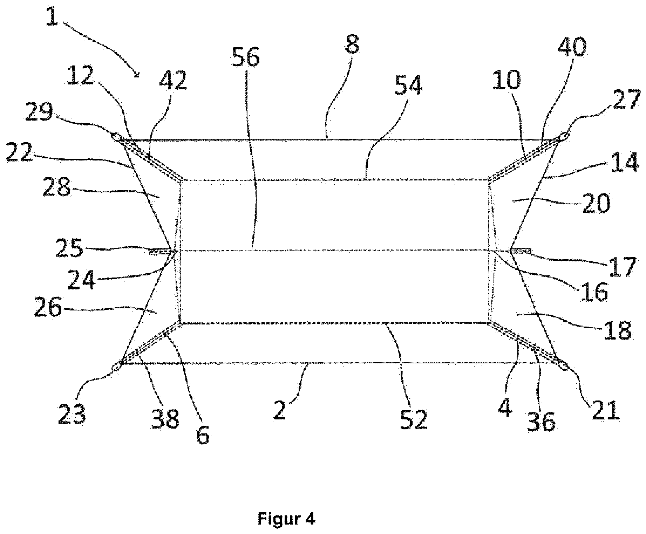

Die Figur 3 zeigt eine ganz besonders bevorzugte Ausführungsform eines erfindungsgemä-βen Kunststofffolien-Bodenbeutels (1). Darin sind die Seitenfalten der ersten und zweiten Seitenwand als nach außen gewandte Seitenfaltenschweißnähte (16, 24) bzw. konkreter als nach außen gewandte Seitenfaltenschweißnahtsäume (17, 25) ausgebildet. Auch liegen im Übergang von der Kunststofffolienvorderwand (2) zu den ersten und zweiten Kunststofffolienseitenwänden (14, 22) Hohlsäume (21, 23) vor, die durch Verschweißung der Kunststofffolienvorderwand (2) mit einerseits der ersten Kunststofffolienseitenwand (14) und andererseits der zweiten Kunststofffolienseitenwand (22) erhältlich sind bzw. erhalten wurden. In entsprechender Weise liegen auch im Übergang von der Kunststofffolienrückwand (8) zu den ersten und zweiten Kunststofffolienseitenwänden (14, 22) Hohlsäume (27, 29) vor, die durch Verschweißung der Kunststofffolienrückwand (8) mit einerseits der ersten Kunststofffolienseitenwand (14) und andererseits der zweiten Kunststofffolienseitenwand (22) erhältlich sind bzw. erhalten wurden. Zusätzlich sind die Beutelöffnungsränder von Kunststofffolienvorderwand (2), Kunststofffolienrückwand (8), erster Kunststofffolienseitenwand (14) und zweiter Kohlenstofffolienseitenwand (22) im Bereich der Beutelöffnung (30) jeweils durch einen umgeschlagenen Folienstreifen (50, 51, 53, 55) in der abgebildeten Ausführungsform unter Ausbildung eines umlaufenden Saumes verstärkt. Hierdurch wird die der Erfindung zugrunde liegende Aufgabe, ein sofortiges ungehindertes beidhändiges Befüllen des noch vollständig leeren Beutels, in Kombination mit den Seitenfaltenschweißnähten (16, 24) und den Hohlsäumen (21, 23, 27, 29) in besonders zuverlässiger gelöst (s.a. Figur 4). Auch bei der Ausführungsform gemäß Figur 3 hat es sich als vorteilhaft, insbesondere in der Handhabung und Faltung, des erfindungsgemäßen Kunststofffolien-Bodenbeutels (1) erwiesen, wenn die in dem Kunststofffolienbeutelboden (68) vorliegende Mittelfalte bzw. Mittelfalz (56) sich über den Kunststofffolienbeutelboden (68) hinaus in den an den Schmalseiten sich jeweils anschließenden dreieckförmigen Elementen bis zu den Eck- bzw. Mündungspunkten (62) bzw. (64) fortsetzt (siehe gestrichelte Linien).

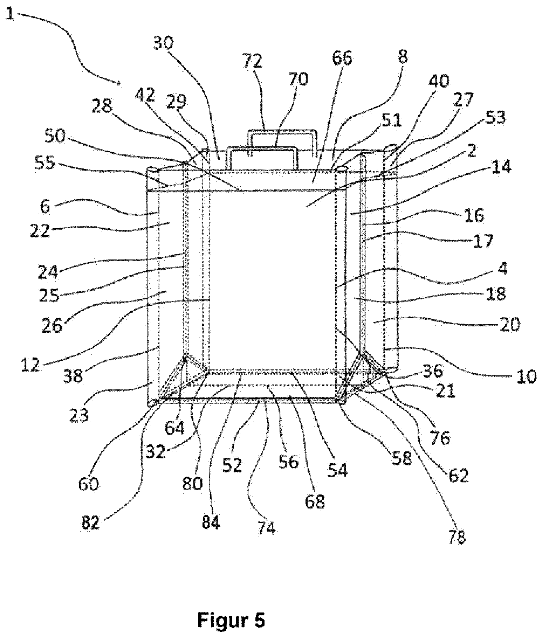

Figur 5 zeigt eine schematische perspektivische Seitenansicht einer bevorzugten Ausgestaltung der weiteren Ausführungsvariante eines erfindungsgemäßen Kunststofffolien-Bodenbeutels und kann als Weiterentwicklung des Kunststofffolien-Bodenbeutels gemäß Figur 3 angesehen werden. Die in der Figur 5 verwendeten Bezugszeichen stimmen für identische Bestandteile mit den korrespondierenden Bezugszeichen der in den Figuren 1 bis 4 geschilderten Ausführungsformen überein. Zusätzlich zu der Ausführungsform des erfindungsgemäßen Kunststofffolien-Bodenbeutels gemäß Figur 3 sind bei dem Kunststofffolien-Bodenbeutel gemäß Figur 5 im Übergang von der ersten Kunststofffolienseitenwand (14) zum Kunststofffolienbeutelboden (68) die erste Kunststofffolienseitenwand (14) und der Kunststofffolienbeutelboden (68) miteinander verschweißt unter Ausbildung eines Saums bzw. Hohlsaums (78) verschweißt. Korrespondierend hierzu sind im Übergang von der zweiten Kunststofffolienseitenwand (22) zum Kunststofffolienbeutelboden (68) die zweite Kunststofffolienseitenwand (22) und der Kunststofffolienbeutelboden (68) unter Ausbildung eines Saums bzw. Hohlsaums (82) verschweißt. Darüber hinaus sind zur Ausbildung einer noch ausgeprägteren Standfestigkeit im unbefüllten Zustand im Übergang von der Kunststofffolienvorderwand (2) zum Kunststofffolienbeutelboden (68) die Kunststofffolienvorderwand (2) und der Kunststofffolienbeutelboden (68) unter Ausbildung eines Saums bzw. Hohlsaums (74) verschweißt. Korrespondierend hierzu sind im Übergang von der Kunststofffolienrückwand (8) zum Kunststofffolienbeutelboden (68) die Kunststofffolienrückwand (8) und der Kunststofffolienbeutelboden (68) unter Ausbildung eines Saums bzw. Hohlsaums (84) verschweißt.

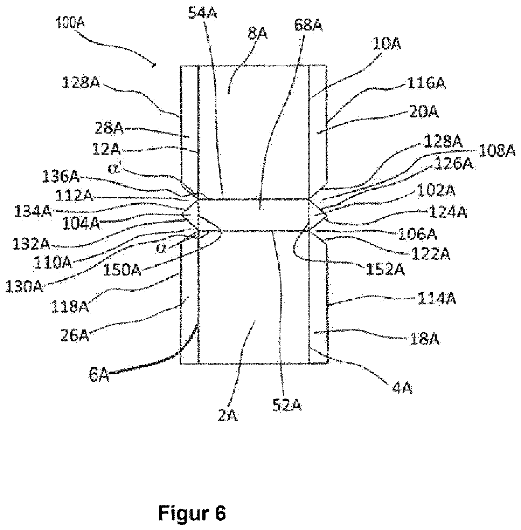

Die Figur 6 zeigt eine schematische Draufsicht auf einen flach ausgelegten Folienzuschnitt (100A), wie er für die Herstellung eines erfindungsgemäßen Kunststofffolien-Bodenbeutels (1), wie in Figur 1 wiedergegeben, eingesetzt werden kann. Der Zuschnitt (100A) verfügt über einen Kunststofffolienvorderwandabschnitt (2A) mit einem Beutelöffnungsrand sowie über einen Kunststofffolienrückwandabschnitt (8A) mit einem Beutelöffnungsrand. An der einen Seite des Kunststofffolienvorderwandabschnitts (2A) schließt sich der erste Seitenwandabschnitt (18A) der ersten Seitenwand und an der gegenüberliegenden Seite der erste Seitenwandabschnitt (26A) der zweiten Seitenwand an. In der dargestellten Ausführungsform sind der Kunststofffolienvorderwandabschnitt (2A) und die ersten Seitenwandabschnitte (18A, 26A) von erster und zweiter Seitenwand, die entlang der Seitenrandverläufe (4A) und (6A) ineinander übergehen, einstückig ausgebildet. Im Übergang von dem Kunststofffolienvorderwandabschnitt (2A) zu den genannten ersten Seitenwandabschnitten (18A, 26A), d.h. entlang der Seitenrandverläufe (4A) und (6A), liegen im fertigen Produkt Falten, Falze oder Schweißnähte, beispielsweise in Form eines Hohlsaums, vor. Hierzu korrespondierend geht der Kunststofffolienrückwandabschnitt (8A) entlang der Seitenrandverläufe (10A) und (12A) über in den zweiten Seitenwandabschnitt (20A) der ersten Seitenwand und an der gegenüberliegenden Seite in den zweiten Seitenwandabschnitt (28A) der zweiten Seitenwand. Der Kunststofffolienvorderwandabschnitt (2A) und der Kunststofffolienrückwandabschnitt (8A) sind in dem Zuschnitt (100) über den Kunststofffolienbeutelbodenabschnitt (68A) miteinander verbunden. In der dargestellten Ausführungsform liegen der Kunststofffolienvorderwandabschnitt (2A), einschließlich der ersten Seitenwandabschnitte (18A, 26A), der Kunststofffolienrückwandabschnitt (8A), einschließlich der zweiten Seitenwandabschnitte (20A, 28A), und der Kunststofffolienbeutelbodenabschnitt (68A) einstückig vor. Der Kunststofffolienbeutelboden des aus dem Zuschnitt (100A) gefertigten Kunststofffolien-Bodenbeutels ist im Wesentlichen rechteckig ausgeformt (angedeutet durch die gepunkteten Linien), kann jedoch auch eine quadratische Grundform haben. Der Beutelbodenabschnitt (68A) verfügt an seinen gegenüberliegenden Seiten über dreieckig ausgeformte oder trapezförmige Verlängerungen (102A, 104A). Demgemäß kann der Zuschnitt (100A) aus einem einzigen rechteckigen Folienstreifen durch Ausstanzen oder Ausschneiden von vier dreieckigen oder trapezförmigen Segmenten 106A, 108A, 110A und 112A erhalten werden. Indem man zum Beispiel den Kunststofffolienvorderwandabschnitt (2A), den Kunststofffolienrückwandabschnitt (8A) und die dreieckig ausgeformten oder trapezförmigen Verlängerungen (102A, 104A) hochklappt und die die erste Seitenwand bildenden ersten Seitenwandabschnitte (18A, 26A) sowie die die zweite Seitenwand bildenden zweiten Seitenwandabschnitte (20A, 28A) aufeinander zuführt, können die aneinander angrenzenden Randverläufe (114A) und (116A) sowie (118A) und (120A) und ebenfalls die Randverläufe der dreieckig ausgeformten oder trapezförmigen Verlängerungen (122A) und (124A) sowie (126A) und (128A) einerseits und (130A) und (132A) sowie (134A) und (136A) andererseits miteinander verbunden, insbesondere verschweißt werden unter Ausbildung der Schweißnähte (63) und (65) bzw. (67) und (69). Auf diese Weise kann man zu dem erfindungsgemäßen Kunststofffolien-Bodenbeutel gelangen. Mit den gestrichelten Linien werden die einander gegenüberliegenden Bodenseitenränder (150A) und (152A) angedeutet, welche man bei Fertigstellung des Kunststofffolienbeutels aus dem Kunststofffolienbeutelbodenabschnitt (68A) erhält.

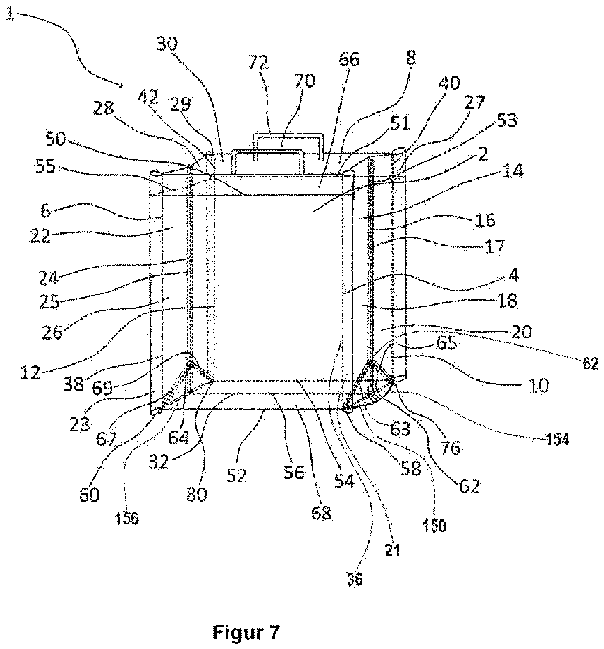

Figur 7 zeigt eine schematische perspektivische Seitenansicht einer weiteren Ausführungsvariante eines erfindungsgemäßen Kunststofffolien-Bodenbeutels, gebildet aus einem rechteckförmigen Zuschnitt, wie in Figur 8 dargestellt. In diesem Zuschnitt werden Merkmale, die auch in dem Zuschnitt gemäß Figur 6 zu finden sind, mit identischen Bezugszeichen bezeichnet. Indem dieser Zuschnitt nicht über die dreieckförmigen Ausstanzungen des Zuschnitts gemäß Figur 6 verfügt, werden beim Zusammenführen und Verschweißen der die erste Seitenwand bildenden ersten Seitenwandabschnitte (18, 26) sowie der die zweite Seitenwand bildenden zweiten Seitenwandabschnitte (20B, 28) die erste Seitenfaltenschweißnaht (16) und die zweite Seitenfaltenschweißnaht (24) in einer Weise gebildet, dass sie beide, anders als bei der Ausführungsform gemäß Figur 1, sich bis zum Kunststofffolienbeutelboden erstrecken. Wie in Figur 7 dargestellt, liegen in der Nähe des Kunststofffolienbeutelbodens bei der ersten und der zweiten Seitenwand im Wesentlichen deckungsgleiche dreieckförmige Abschnitte aneinander an. Diese bilden sich beim Zusammenfügen des Zuschnitts, wie er in Figur 8 wiedergegeben ist.

Die Figur 8 zeigt im Detail eine schematische Draufsicht auf einen flach ausgelegten Folienzuschnitt (100B), wie er für die Herstellung eines erfindungsgemäßen Kunststofffolien-Bodenbeutels (1), wie z.B. in Figur 7 wiedergegeben, eingesetzt werden kann. Der Zuschnitt (100B) verfügt über einen Kunststofffolienvorderwandabschnitt (2B) mit einem Beutelöffnungsrand sowie über einen Kunststofffolienrückwandabschnitt (8B) mit einem Beutelöffnungsrand. An der einen Seite des Kunststofffolienvorderwandabschnitts (2B) schließt sich der erste Seitenwandabschnitt (18B) der ersten Seitenwand und an der gegenüberliegenden Seite der erste Seitenwandabschnitt (26B) der zweiten Seitenwand an. In der dargestellten Ausführungsform sind der Kunststofffolienvorderwandabschnitt (2B) und die ersten Seitenwandabschnitte (18B, 26B) von erster und zweiter Seitenwand einstückig ausgebildet. Im Übergang von dem Kunststofffolienvorderwandabschnitt (2B) zu den genannten ersten Seitenwandabschnitten (18B, 26B) liegen im fertigen Produkt Falten, Falze oder Schweißnähte, beispielsweise in Form eines Hohlsaums, vor. Hierzu korrespondierend verfügt der Kunststofffolienrückwandabschnitt (8B) über einen zweiten Seitenwandabschnitt (20B) der ersten Seitenwand und an der gegenüberliegenden Seite über einen zweiten Seitenwandabschnitt (28B) der zweiten Seitenwand. Der Kunststofffolienvorderwandabschnitt (2B) und der Kunststofffolienrückwandabschnitt (8B) sind in dem Zuschnitt (100B) über den Beutelbodenabschnitt (68B) miteinander verbunden. In der dargestellten Ausführungsform liegen der Kunststofffolienvorderwandabschnitt (2B), einschließlich der ersten Seitenwandabschnitte (18B, 26B), der Kunststofffolienrückwandabschnitt (8B), einschließlich der zweiten Seitenwandabschnitte (20B, 28B), und der Beutelbodenabschnitt (68B) einstückig vor. Der Kunststofffolienbeutelboden des aus dem Zuschnitt (100B) gefertigten Kunststofffolien-Bodenbeutels ist im Wesentlichen rechteckig ausgeformt (angedeutet durch die gepunkteten Linien), kann jedoch auch eine quadratische Grundform haben. Der Beutelbodenabschnitt (68B) verfügt an seinen gegenüberliegenden Seiten über rechteckig ausgeformte Verlängerungen (102B, 104B). Diese rechteckig ausgeformten Verlängerungen (102B) und (104B) liegen einstückig mit den ersten Seitenwandabschnitten (18B) und (26B) bzw. mit den zweiten Seitenwandabschnitten (20B) und (28B) vor. Demgemäß kann der Zuschnitt (100B) aus einem einzigen rechteckigen Folienstreifen erhalten werden. Indem man zum Beispiel den Kunststofffolienvorderwandabschnitt (2B), den Kunststofffolienrückwandabschnitt (8B) hochklappt und die die erste Seitenwand bildenden ersten Seitenwandabschnitte (18B, 26B) sowie die die zweite Seitenwand bildenden zweiten Seitenwandabschnitte (20B, 28B) aufeinander zuführt, können die aneinander angrenzenden Randverläufe (114B) und (116B) sowie (118B) und (120B) miteinander verbunden, insbesondere verschweißt werden unter Ausbildung des Beutel- bzw. Taschenkörpers. Indem man die beim Hochklappen von Vorder- und Rückwand aneinander zur Anlage kommenden, in Figur 8 mit gestrichelten Linien angedeuteten Areale (122B) und (124B) sowie (126B) und (128B) einerseits und (130B) und (132B) sowie (134B) und (136B) andererseits miteinander verbindet, insbesondere verschweißt, werden die Schweißnähte (63) und (65) bzw. (67) und (69) ausgebildet. In einer zweckmäßigen Ausgestaltung werden hierfür die dreieckigen Areale (102B) und (104B) aus der Ebene der Bodenfläche (68B) hochgeklappt, wobei gleichzeitig die Vorder- und die Rückwandabschnitte (2B) und (8B) aufeinander zu geführt werden, sodass die Randverläufe (114B) und (116B) einerseits und (118B) und (120B) andererseits miteinander verbunden bzw. verschweißt werden können. Es entstehen hierbei auf beiden Seitenwandarealen jeweils zwei einander im Wesentlichen in Deckung befindliche Dreiecksbereiche

Hierbei enthält der außenliegende dreieckförmige Abschnitt der ersten Seitenwand, der begrenzt ist durch die Schweißnähte (63) und (65), die erste Seitenfaltenschweißnaht (16). Der innenliegende dreieckförmige Abschnitt erstreckt sich von der Faltlinie (150B) bis zu dem Schnittpunkt der Schweißnähte (63) und (65) mit der ersten Seitenfaltenschweißnaht (16) bzw. dem Treffpunkt der gestrichelten Linien (124B) und (126B). In entsprechender Weise werden für die zweite Seitenwand korrespondierende innen- und außenliegende dreieckförmige Abschnitte ausgebildet.

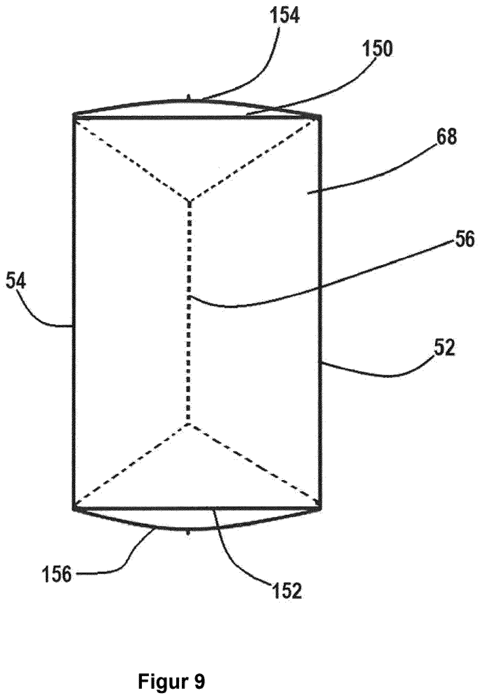

Figur 9 zeigt eine schematische perspektivische Draufsicht auf die Unterseite des erfindungsgemäßen Kunststofffolien-Bodenbeutels gemäß Figur 7. Der Beutelboden (68) ist mit Faltlinien (gestrichelte Linie), beispielsweise in Form der Mittelfalz (56), ausgestattet, die ein leichtes Zusammenfalten gestatten. Der Beutelboden (68) wird begrenzt durch die erste Bodenfalte (52), die gegenüberliegende zweite Bodenfalte (54) sowie die ebenfalls einander gegenüberliegenden dritten und vierten Bodenfalten (150) und (152). Während die vorangehend im Zusammenhang mit der Figur 8 beschriebenen innenliegenden dreieckförmigen Abschnitte im Bodenbereich von den dritten und vierten Bodenfalte (150) und (152) begrenzt werden, werden die jeweiligen außenliegenden dreieckförmigen Abschnitte durch die im Wesentlichen hierzu parallel verlaufenden bodenseitigen Randverläufe (154) und (156) begrenzt. Die genannten innen- und außenliegenden dreieckförmigen Abschnitte können dabei sowohl eng aneinander anliegen als auch, wie in Figur 9 gezeigt, voneinander beabstandet vorliegen.

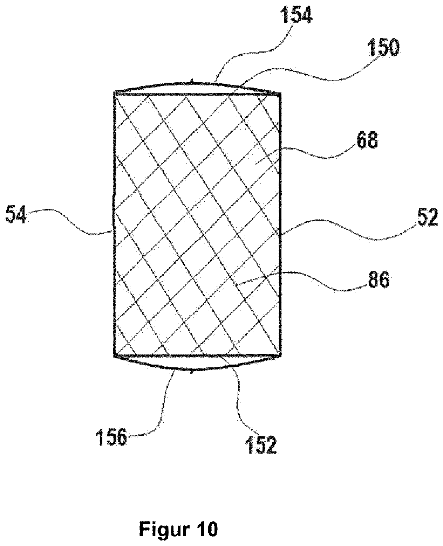

Figur 10 zeigt eine schematische perspektivische Draufsicht auf die Unterseite eines erfindungsgemäßen Kunststofffolien-Bodenbeutels, die im Wesentlichen mit der in Figur 9 dargestellten Konstruktion des Beutelbodens übereinstimmt. Bei der Ausführungsform des erfindungsgemäßen Kunststofffolien-Bodenbeutels (1) gemäß Figur 10 ist die Außenseite des Beutelbodens (68) mit einem geschweißten Prägemuster (86) in Wabenform ausgestattet. Durch Verwendung geschweißter Prägemuster gelangt man äußerst effizient zu einem Beutel, der auch im unbefüllten Zustand ohne äußere Hilfe oder Hilfsmittel offengehalten und damit beidhändig befüllt werden kann.

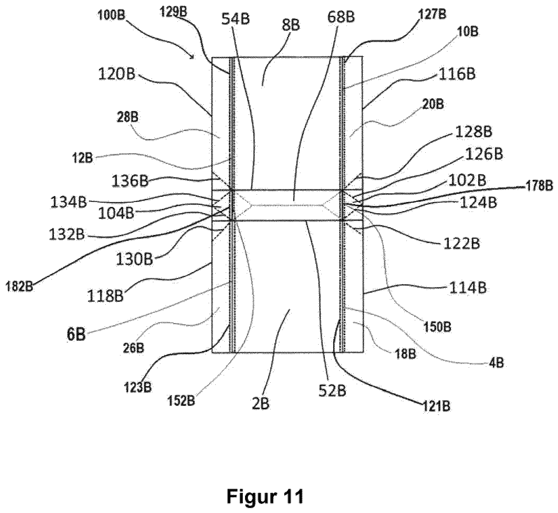

Figur 11 zeigt eine schematische perspektivische Draufsicht auf eine weitere Ausführungsform eines Folienzuschnitts gemäß Figur 8. Die in der Figur 11 verwendeten Bezugszeichen stimmen für identische Bestandteile mit den korrespondierenden Bezugszeichen der für Figur 8 geschilderten Ausführungsform überein. Zusätzlich zu dieser Ausführungsform verfügt der in Figur 11 abgebildete Folienzuschnitt über entlang der einander gegenüberliegenden Seitenrandverläufe (4B) und (6B) jeweils vorliegende Schweißnähte (121B) und (123B), die vorzugsweise als Saum und besonders bevorzugt als Hohlsaum ausgebildet sind. Ferner verfügt der in Figur 11 abgebildete Folienzuschnitt über entlang der dritten und vierten Bodenseitenränder (150B, 152B) jeweils vorliegende Schweißnähte (178B) und (182B), die ebenfalls vorzugsweise als Saum oder Hohlsaum ausgebildet sind. Bevorzugt geht, wie in Figur 11 dargestellt, die Schweißnaht (178B) an ihren einander gegenüberliegenden Enden im Wesentlichen übergangslos über in die Schweißnaht (121B) und die Schweißnaht (127B), und die Schweißnaht (182B) geht an ihren einander gegenüberliegenden Enden bevorzugt ebenfalls im Wesentlichen übergangslos über in die Schweißnaht (123B) und die Schweißnaht (123B). Mit dem geschilderten Folienzuschnitt gelangt man effizient zu den erfindungsgemäßen Kunststofffolien-Bodenbeuteln, insbesondere der weiteren Ausführungsvariante.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Kunststofffolien-Bodenbeutel (1) mit einer Beutelöffnung (30) und einem gegenüberliegenden Beutelende (32), umfassend
- eine Kunststofffolienvorderwand (2) mit einem Beutelöffnungsrand sowie einem ersten Seitenrand (4) und einem gegenüberliegenden zweiten Seitenrand (6),
- eine Kunststofffolienrückwand (8) mit einem Beutelöffnungsrand sowie mit einem ersten Seitenrand (10) und einem gegenüberliegenden zweiten Seitenrand (12),
- eine erste Kunststofffolienseitenwand (14) mit einem Beutelöffnungsrand sowie mit einer sich von oder beabstandet von dem Beutelöffnungsrand in Richtung des Beutelendes (32) oder bis zum Beutelende (32) erstreckenden ersten Seitenfaltenschweißnaht (16), umfassend diesseits und jenseits der ersten Seitenfaltenschweißnaht (16) einen ersten und einen zweiten Seitenwandabschnitt (18, 20), die sich jeweils von der ersten Seitenfaltenschweißnaht (16) bis zum ersten Seitenrand (4, 10) der Kunststofffolienvorderwand (2) bzw. der Kunststofffolienrückwand (8) erstrecken,
- eine zweite Kunststofffolienseitenwand (22) mit einem Beutelöffnungsrand sowie mit einer sich von oder beabstandet von dem Beutelöffnungsrand in Richtung des Beutelendes (32) oder bis zum Beutelende (32) erstreckenden zweiten Seitenfaltenschweißnaht (24), umfassend diesseits und jenseits der zweiten Seitenfaltenschweißnaht (24)einen ersten und einen zweiten Seitenwandabschnitt (26, 28), die sich jeweils von der zweiten Seitenfaltenschweißnaht (24) bis zum zweiten Seitenrand (6, 12) der Kunststofffolienvorderwand (2) bzw. der Kunststofffolienrückwand (8) erstrecken, und
- einen Kunststofffolienbeutelboden (68) mit einer Innen- und einer Außenseite, wobei im Übergang von der Kunststofffolienvorderwand (2) zum Kunststofffolienbeutelboden (68) eine erste Bodenfalz (52) vorliegt und wobei im Übergang von der Kunststofffolienrückwand (8) zum Kunststofffolienbeutelboden (68) eine zweite Bodenfalz (54) vorliegt, **dadurch gekennzeichnet, dass** sich von einem ersten Mündungspunkt (58), bei dem der erste Bodenfalz (52) in den ersten Seitenrand (4) der Kunststofffolienvorderwand (2) mündet, und der beabstandet von dem Kunststofffolienbeutelboden (68) endenden ersten Seitenfaltenschweißnaht (16) eine erste Schweißnaht (63) erstreckt und dass sich von einem zweiten Mündungspunkt (76), bei dem der zweite Bodenfalz (54) in den ersten Seitenrand (10) der Kunststofffolienrückwand (8) mündet, und der beabstandet von dem Kunststofffolienbeutelboden (68) endenden ersten Seitenfaltenschweißnaht (16) eine zweite Schweißnaht (65) erstreckt und/oder dass sich von einem dritten Mündungspunkt (60), bei dem der erste Bodenfalz (52) in den zweiten Seitenrand (6) der Kunststofffolienvorderwand (2) mündet, und der beabstandet von dem Kunststofffolienbeutelboden (68) endenden zweiten Seitenfaltenschweißnaht (24) eine dritte Schweißnaht (67) erstreckt und dass sich von einem vierten Mündungspunkt (80), bei dem der zweite Bodenfalz (54) in den zweiten Seitenrand (12) der Kunststofffolienrückwand (8) mündet, und der beabstandet von dem Kunststofffolienbeutelboden (68) endenden zweiten Seitenfaltenschweißnaht (24) eine vierte Schweißnaht (69) erstreckt.

2. Kunststofffolien-Bodenbeutel (1) nach Anspruch 1, **dadurch gekennzeichnet, dass** die zwischen dem ersten Seitenwandabschnitt (18) und dem zweiten Seitenwandabschnitt (20) der ersten Kunststofffolienseitenwand (14) vorliegende erste Seitenfaltenschweißnaht (16) einen nach außen gewandten Seitenfaltenschweißnahtsaum (17), insbesondere mit einer durchschnittlichen Breite im Bereich von 1,0 bis 4,0 mm, darstellt und dass
die zwischen dem ersten Seitenwandabschnitt (26) und dem zweiten Seitenwandabschnitt (28) der zweiten Kunststofffolienseitenwand (22) vorliegende zweite Seitenfaltenschweißnaht (24) einen nach außen gewandten Seitenfaltenschweißnahtsaum (25), insbesondere mit einer durchschnittlichen Breite im Bereich von 1,0 bis 4,0 mm, darstellt.

3. Kunststofffolien-Bodenbeutel (1) nach einem der Ansprüche 1 oder 2, **dadurch gekennzeichnet, dass**
im Übergang von der Kunststofffolienvorderwand (2) zum ersten Seitenwandabschnitt (18) der ersten Kunststofffolienseitenwand (14) eine Falte (36), insbesondere Falz, vorliegt und/oder, vorzugsweise und, dass im Übergang von der Kunststofffolienvorderwand (2) zum ersten Seitenwandabschnitt (26) der zweiten Kunststofffolienseitenwand (22) eine Falte (38), insbesondere Falz, vorliegt und/oder, vorzugsweise und, dass im Übergang von der Kunststofffolienrückwand (8) zum zweiten Seitenwandabschnitt (20) der ersten Kunststofffolienseitenwand (14) eine Falte (40), insbesondere Falz, vorliegt und/oder, vorzugsweise und, dass im Übergang von der Kunststofffolienrückwand (8) zum zweiten Seitenwandabschnitt (28) der zweiten Kunststofffolienseitenwand (22) eine Falte (42), insbesondere Falz, vorliegt.

4. Kunststofffolien-Bodenbeutel (1) nach einem der Ansprüche 1 bis 3, **dadurch gekennzeichnet, dass**
im Übergang von der Kunststofffolienvorderwand (2) zum ersten Seitenwandabschnitt (18) der ersten Kunststofffolienseitenwand (14) entlang und im Bereich der Falte (36) oder Falz die Kunststofffolienvorderwand (2) und der erste Seitenwandabschnitt (18) der ersten Kunststofffolienseitenwand (14) miteinander verschweißt vorliegen unter Ausbildung eines Saums oder Hohlsaums (21), und/oder, vorzugsweise und, dass
im Übergang von der Kunststofffolienvorderwand (2) zum ersten Seitenwandabschnitt (26) der zweiten Kunststofffolienseitenwand (22) entlang und im Bereich der Falte (38) oder Falz die Kunststofffolienvorderwand (2) und der erste Seitenwandabschnitt (26) der zweiten Kunststofffolienseitenwand (22) miteinander verschweißt vorliegen unter Ausbildung eines Saums oder Hohlsaums (23), und/oder, vorzugsweise und, dass
im Übergang von der Kunststofffolienrückwand (8) zum zweiten Seitenwandabschnitt (20) der ersten Kunststofffolienseitenwand (14) entlang und im Bereich der Falte (40) oder Falz die Kunststofffolienrückwand (8) und der zweite Seitenwandabschnitt (20) der ersten Kunststofffolienseitenwand (14) miteinander verschweißt vorliegen unter Ausbildung eines Saums oder Hohlsaums (27), und/oder, vorzugsweise und, dass
im Übergang von der Kunststofffolienrückwand (8) zum zweiten Seitenwandabschnitt (28) der zweiten Kunststofffolienseitenwand (22) entlang und im Bereich der Falte (42) oder Falz die Kunststofffolienrückwand (8) und der zweite Seitenwandabschnitt (28) der zweiten Kunststofffolienseitenwand (22) miteinander verschweißt vorliegen unter Ausbildung eines Saums oder Hohlsaums (29).

5. Kunststofffolien-Bodenbeutel (1) nach einem der vorangehenden Ansprüche, **dadurch gekennzeichnet, dass**
die Kunststofffolienvorderwand (2) im Bereich des Beutelöffnungsrands innen- und/oder außenseitig, insbesondere innenseitig, einen ein- oder mehrlagigen Folienstreifen (50) aufweist und/oder, vorzugsweise und, dass
die Kunststofffolienrückwand (8) im Bereich des Beutelöffnungsrands innen- und/oder außenseitig, insbesondere innenseitig, einen ein- oder mehrlagigen Folienstreifen (51) aufweist und/oder, insbesondere und, dass
die erste Kunststofffolienseitenwand (14) im Bereich des Beutelöffnungsrands innen- und/oder außenseitig, insbesondere innenseitig, einen ein- oder mehrlagigen Folienstreifen (53) aufweist und/oder, insbesondere und, dass
die zweite Kunststofffolienseitenwand (22) im Bereich des Beutelöffnungsrands innen- und/oder außenseitig, insbesondere innenseitig, einen ein- oder mehrlagigen Folienstreifen (55) aufweist.

6. Kunststofffolien-Bodenbeutel (1) nach Anspruch 5, **dadurch gekennzeichnet, dass** der ein- oder mehrlagige Folienstreifen (50, 51, 53, 55), insbesondere als Bestandteil der Kunststofffolienvorderwand (2), der Kunststofffolienrückwand (8), der ersten Kunststofffolienseitenwand (14) und/oder der zweiten Kunststofffolienseitenwand (22), einen Öffnungsrandsaum darstellt und/oder einstückig mit der Kunststofffolienvorderwand (2), der Kunststofffolienrückwand (8), der ersten Kunststofffolienseitenwand (14) bzw. der zweiten Kunststofffolienseitenwand (22) ausgebildet ist.

7. Kunststofffolien-Bodenbeutel (1) nach einem der vorangehenden Ansprüche,
**dadurch gekennzeichnet, dass** dieser neben der ersten und zweiten Seitenfaltenschweißnaht (16, 24) im Bereich der Kunststofffolienvorderwand (2), der Kunststofffolienrückwand (8), der ersten Kunststofffolienseitenwand (14) und der zweiten Kunststofffolienseitenwand (12), insbesondere einschließlich der jeweiligen Übergänge, keine weitere sich vom oder beabstandet vom Beutelöffnungsrand in Richtung des Beutelendes (32) oder bis zum Beutelende (32) erstreckende Schweißnaht aufweist.

8. Kunststofffolien-Bodenbeutel (1) nach einem der vorangehenden Ansprüche,
**dadurch gekennzeichnet, dass**
die Kunststofffolienvorderwand (2) und/oder Kunststofffolienrückwand (8) ein ein- oder mehrlagiges Folienmaterial (66) aufweisen und/oder dass das Folienmaterial (66) von Kunststofffolienvorderwand (2) und/oder Kunststofffolienrückwand (8) aus Polyolefinen, bevorzugt Polyethylen und/oder Polypropylen und besonders bevorzugt HD-Polyethylen, umfasst oder hieraus besteht.

9. Kunststofffolien-Bodenbeutel (1) nach einem der vorangehenden Ansprüche, **dadurch gekennzeichnet, dass**
dieser im Wesentlichen einstückig ausgebildet ist und/oder dass die Kunststofffolienvorderwand (2), der Kunststofffolienbeutelboden (68) und die Kunststofffolienrückwand (8) zusammenhängend, bevorzugt ohne Verbindungsnaht, besonders bevorzugt einstückig, vorliegen und/oder dass die Kunststofffolienvorderwand (2), der erste Seitenwandabschnitt (18) der ersten Kunststofffolienseitenwand (14) und der erste Seitenwandabschnitt (26) der zweiten Kunststofffolienseitenwand (22) zusammenhängend, bevorzugt ohne Verbindungsnaht, besonders bevorzugt einstückig, vorliegen und/oder dass die Kunststofffolienrückwand (8), der zweite Seitenwandabschnitt (20) der ersten Kunststofffolienseitenwand (14) und der zweite Seitenwandabschnitt (28) der zweiten Kunststofffolienseitenwand (22) zusammenhängend, bevorzugt ohne Verbindungsnaht, besonders bevorzugt einstückig, vorliegen.

10. Kunststofffolien-Bodenbeutel (1) nach einem der vorangehenden Ansprüche, **dadurch gekennzeichnet, dass** e im Übergang von der Kunststofffolienvorderwand (2) zum Kunststofffolienbeutelboden (68) entlang und im Bereich der Falz (52) die Kunststofffolienvorderwand (2) und der Kunststofffolienbeutelboden (68) miteinander verschweißt vorliegen unter Ausbildung eines Saums oder Hohlsaums (74), und dass im Übergang von der Kunststofffolienrückwand (8) zum Kunststofffolienbeutelboden (68) entlang und im Bereich der Falz (54) die Kunststofffolienrückwand (8) und der Kunststofffolienbeutelboden (68) miteinander verschweißt vorliegen unter Ausbildung eines Saums oder Hohlsaums (84).

11. Kunststofffolien-Bodenbeutel (1) nach einem der vorangehenden Ansprüche,
**dadurch gekennzeichnet, dass**
im Übergang von der ersten Kunststofffolienseitenwand (14) zum Kunststofffolienbeutelboden (68) eine Falte oder Falz (150) vorliegt und/oder dass im Übergang von der ersten Kunststofffolienseitenwand (14) zum Kunststofffolienbeutelboden (68) entlang und im Bereich der Falte oder Falz (150) die erste Kunststofffolienseitenwand (14) und der Kunststofffolienbeutelboden (68) miteinander verschweißt vorliegen unter Ausbildung eines Saums oder Hohlsaums (78), und dass
im Übergang von der zweiten Kunststofffolienseitenwand (22) zum Kunststofffolienbeutelboden (68) eine Falte oder Falz (auch vierte Bodenfalte oderfalz (152) genannt) vorliegt und/oder dass im Übergang von der zweiten Kunststofffolienseitenwand (22) zum Kunststofffolienbeutelboden (68) entlang und im Bereich der Falte oder Falz (152) die zweite Kunststofffolienseitenwand (22) und der Kunststofffolienbeutelboden (68) miteinander verschweißt vorliegen unter Ausbildung eines Saums oder Hohlsaums (82).

12. Kunststofffolien-Bodenbeutel (1) nach einem der vorangehenden Ansprüche,
**dadurch gekennzeichnet, dass**
der Kunststofffolienbeutelboden (68) eine Mittelfalte (56) oder -falz aufweist, die sich beabstandet vom oder vom ersten Seitenrand (4, 10) in Richtung des oder bis zum gegenüberliegenden zweiten Seitenrand (6, 12) erstreckt.

13. Kunststofffolien-Bodenbeutel (1) nach einem der vorangehenden Ansprüche,
**dadurch gekennzeichnet, dass**
die Breite der Kunststofffolienvorderwand (2) und/oder die Breite der Kunststofffolienrückwand (8) größer oder gleich, insbesondere größer, der Summe gebildet aus der Breite des ersten Seitenwandabschnitts (18) der ersten Kunststofffolienseitenwand (14) und des ersten Seitenwandabschnitts (26) der zweiten Kunststofffolienseitenwand (22) und/oder der Summe gebildet aus der Breite des zweiten Seitenwandabschnitts (20) der ersten Kunststofffolienseitenwand (14) und des zweiten Seitenwandabschnitts (28) der zweiten Kunststofffolienseitenwand (22) ist.

14. Kunststofffolien-Bodenbeutel (1) nach einem der vorangehenden Ansprüche,
**dadurch gekennzeichnet, dass**
der Kunststofffolienbeutelboden (68) ein, insbesondere auf der Außenseite angebrachtes, Prägeschweißmuster aufweist.

15. Kunststofffolien-Bodenbeutel (1) nach Anspruch 14, **dadurch gekennzeichnet, dass** das Prägeschweißmuster eine Wabenstruktur, eine Linienstruktur oder eine Ringstruktur umfasst oder darstellt.

16. Kunststofffolien-Bodenbeutel (1) nach einem der vorangehenden Ansprüche,
**dadurch gekennzeichnet, dass**
die erste Seitenfaltenschweißnaht (16), die erste Schweißnaht (63) und die zweite Schweißnaht (65) einen gemeinsamen Mündungsbereich (62) aufweisen und/oder dass
die zweite Seitenfaltenschweißnaht (24), die dritte Schweißnaht (67) und die vierte Schweißnaht (69) einen gemeinsamen Mündungsbereich (64) aufweisen.

17. Kunststofffolien-Bodenbeutel (1) nach einem der vorangehenden Ansprüche, ferner umfassend
mindestens ein erstes Trageelement (70), vorzugsweise an oder benachbart zur Beutelöffnung (30), an der Kunststofffolienvorderwand (2) und/oder mindestens ein zweites Trageelement (72), vorzugsweise an oder benachbart zur Beutelöffnung (30), an der Kunststofffolienrückwand (8).

18. Kunststofffolien-Bodenbeutel (1) nach Anspruch 17, **dadurch gekennzeichnet, dass** das mindestens eine Trageelement (70, 72) ein Griffloch, eine Halteschlaufe oder einen Haltegriff darstellt.

19. Kunststofffolien-Bodenbeutel (1) nach Anspruch 17 oder 18, **dadurch**
**gekennzeichnet, dass**
das erste Trageelement (70) im Bereich des ein- oder mehrlagige Folienstreifens (50), insbesondere Öffnungsrandsaums, der Kunststofffolienvorderwand (2) befestigt ist oder vorliegt und/oder dass
das zweite Trageelement (72) im Bereich des ein- oder mehrlagige Folienstreifens (51), insbesondere Öffnungsrandsaums, der Kunststofffolienrückwand (8) befestigt ist oder vorliegt.

20. Kunststofffolien-Bodenbeutel (1) nach einem der vorangehenden Ansprüche, ferner enthaltend
einen Einlegeboden, der insbesondere steifer ist als der Kunststofffolienbeutelboden (68).

21. Zuschnitt (100A) für einen Kunststofffolien-Bodenbeutel (1) nach einem der Ansprüche 1 bis 16 aus einer ein- oder mehrlagigen Kunststofffolie mit einem Kunststofffolienvorderwandabschnitt (2A), einem sich hieran entlang einem ersten Bodenseitenrand (52A), insbesondere einstückig, anschließenden im Wesentlichen rechteckigen oder quadratischen Kunststofffolienbeutelbodenabschnitt (68A) und einem sich an diesen, gegenüberliegend zum Kunststofffolienvorderwandabschnitt (2A), entlang einem zweiten Bodenseitenrand (54A), insbesondere einstückig, anschließenden Kunststofffolienrückwandabschnitt (8A), wobei sich an die gegenüberliegenden Bodenseitenränder (150A, 152A) des Kunststofffolienbeutelbodenabschnitts (68A), die nicht mit dem Kunststofffolienvorderwandabschnitt (2A) und dem Kunststofffolienrückwandabschnitt (8A) verbunden sind, jeweils dreieckförmige oder trapezförmige Abschnitte (104A, 102A), insbesondere einstückig, anschließen, wobei der Kunststofffolienvorderwandabschnitt (2A), an einander gegenüberliegenden Seitenrandverläufen (4A, 6A), insbesondere einstückig, jeweils einen Erstreckungsabschnitt (18A, 26A), mit einem geneigten bodenseitigen Rand (122A, 130A) aufweist, der bei Anordnung des Zuschnitts (100A) in einer Ebene mit dem ersten Bodenseitenrand (52A) einem stumpfen Winkel (α) bildet, wobei der Abstand der gegenüberliegenden Seitenrandverläufen (4A, 6A) des Kunststofffolienvorderwandabschnitts (2A) im Wesentlichen dem Abstand zwischen dem dritten (150A) und vierten (152A) Bodenseitenrand entspricht und wobei der Kunststofffolienrückwandabschnitt (8A), an einander gegenüberliegenden Seitenrandverläufen (10A, 12A), insbesondere einstückig, jeweils einen Erstreckungsabschnitt (20A, 28A), mit einem geneigten bodenseitigen Rand (136A, 128A) aufweist, der bei Anordnung des Zuschnitts (100A) in einer Ebene mit dem zweiten Bodenseitenrand (54A) einem stumpfen Winkel (α')_{'} bildet, wobei der Abstand der gegenüberliegenden Seitenrandverläufen (10A, 12A) des Kunststofffolienrückwandabschnitts (8A) im Wesentlichen dem Abstand zwischen dem dritten (150A) und vierten (152A) Bodenseitenrand entspricht.

22. Verwendung des Kunststofffolien-Bodenbeutels (1) nach einem der Ansprüche 1 bis 20 als, insbesondere vielfach, wiederverwendbarer Beutel oder wiederverwendbare Tasche.

## Claims

1. A plastic film bottom bag (1) having a bag opening (30) and an opposite bag end (32), comprising
- a plastic film front wall (2) having a bag opening edge and a first side edge (4) and an opposite second side edge (6),
- a plastic film rear wall (8) having a bag opening edge and having a first side edge (10) and an opposite second side edge (12),
- a first plastic film side wall (14) having a bag opening edge and having a first side fold welded joint (16), extending from or at a distance from the bag opening edge in the direction of the bag end (32) or up to the bag end (32), comprising, on either side of the first side fold welded joint (16), a first and a second side wall section (18, 20), which in each case extend from the first side fold welded joint (16) to the first side edge (4, 10) of the plastic film front wall (2) and the plastic film rear wall (8) respectively,
- a second plastic film side wall (22) having a bag opening edge and having a second side fold welded joint (24), extending from or at a distance from the bag opening edge in the direction of the bag end (32) or up to the bag end (32), comprising, on either side of the second side fold welded joint (24), a first and a second side wall section (26, 28), which in each case extend from the second side fold welded joint (24) to the second side edge (6, 12) of the plastic film front wall (2) and the plastic film rear wall (8) respectively, and
- a plastic film bag bottom (68) having an inner side and an outer side,
wherein a first bottom crease (52) is present in the transition from the plastic film front wall (2) to the plastic film bag bottom (68), and wherein a second bottom crease (54) is present in the transition from the plastic film rear wall (8) to the plastic film bag bottom (68),
**characterized in that**,
a first welded joint (63) extends from a first merging point (58), in which the first bottom crease (52) leads into the first side edge (4) of the plastic film front wall (2), and the first side fold welded joint (16) which ends at a distance from the plastic film bag bottom (68), and that
a second welded joint (65) extends from a second merging point (76), in which the second bottom crease (54) leads into the first side edge (10) of the plastic film rear wall (8), and the first side fold welded joint (16) which ends at a distance from the plastic film bag bottom (68), and/or that
a third welded joint (67) extends from a third merging point (60), in which the first bottom crease (52) leads into the second side edge (6) of the plastic film front wall (2), and
the second side fold welded joint (24) which ends at a distance from the plastic film bag bottom (68), and that
a fourth welded joint (69) extends from a fourth merging point (80), in which the second bottom crease (54) leads into the second side edge (12) of the plastic film rear wall (8), and the second side fold welded joint (24) which ends at a distance from the plastic film bag bottom (68).

2. The plastic film bottom bag (1) according to Claim 1, **characterized in that** the first side fold welded joint (16), which is present between the first side wall section (18) and the second side wall section (20) of the first plastic film side wall (14) constitutes an outwardly facing side fold welded joint seam (17), in particular having an average width in the range from 1.0 to 4.0 mm, and that the second side fold welded joint (24), which is present between the first side wall section (26) and the second side wall section (28) of the second plastic film side wall (22) constitutes an outwardly facing side fold welded joint seam (25), in particular having an average width in the range from 1.0 to 4.0 mm.

3. The plastic film bottom bag (1) according to Claim 1 or 2, **characterized in that**
in the transition from the plastic film front wall (2) to the first side wall section (18) of the first plastic film side wall (14) a fold (36), in particular crease, is present and/or, preferably and, that
in the transition from the plastic film front wall (2) to the first side wall section (26) of the second plastic film side wall (22) a fold (38), in particular crease, is present and/or, preferably and, that
in the transition from the plastic film rear wall (8) to the second side wall section (20) of the first plastic film side wall (14) a fold (40), in particular crease, is present and/or, preferably and, that
in the transition from the plastic film rear wall (8) to the second side wall section (28) of the second plastic film side wall (22) a fold (42), in particular crease, is present.

4. The plastic film bottom bag (1) according to any one of Claims 1 to 3, **characterized in that**
in the transition from the plastic film front wall (2) to the first side wall section (18) of the first plastic film side wall (14) along and in the region of the fold (36) or crease the plastic film front wall (2) and the first side wall section (18) of the first plastic film side wall (14) are welded to one another so as to form a seam or casing seam (21), and/or, preferably and, that
in the transition from the plastic film front wall (2) to the first side wall section (26) of the second plastic film side wall (22) along and in the region of the fold (38) or crease the plastic film front wall (2) and the first side wall section (26) of the second plastic film side wall (22) are welded to one another so as to form a seam or casing seam (23), and/or, preferably and, that
in the transition from the plastic film rear wall (8) to the second side wall section (20) of the first plastic film side wall (14) along and in the region of the fold (40) or crease the plastic film rear wall (8) and the second side wall section (20) of the first plastic film side wall (14) are welded to one another so as to form a seam or casing seam (27), and/or, preferably and, that
in the transition from the plastic film rear wall (8) to the second side wall section (28) of the second plastic film side wall (22) along and in the region of the fold (42) or crease the plastic film rear wall (8) and the second side wall section (28) of the second plastic film side wall (22) are welded to one another so as to form a seam or casing seam (29).

5. The plastic film bottom bag (1) according to any one of the preceding claims, **characterized in that**
the plastic film front wall (2) has a single-layer or multi-layer film strip (50) on the inside and/or outside, in particular on the inside, in the region of the bag opening edge and/or, preferably and, that
the plastic film rear wall (8) has a single-layer or multi-layer film strip (51) on the inside and/or outside, in particular on the inside, in the region of the bag opening edge and/or, in particular and, that
the first plastic film side wall (14) has a single-layer or multi-layer film strip (53) on the inside and/or outside, in particular on the inside, in the region of the bag opening edge and/or, in particular and, that
the second plastic film side wall (22) has a single-layer or multi-layer film strip (55) on the inside and/or outside, in particular on the inside, in the region of the bag opening edge.

6. The plastic film bottom bag (1) according to Claim 5, **characterized in that** the single- or multi-layer film strip (50, 51, 53, 55), in particular as a component of the plastic film front wall (2), the plastic film rear wall (8), the first plastic film side wall (14) and/or the second plastic film side wall (22) constitutes an opening edge seam and/or is formed in one piece with the plastic film front wall (2), the plastic film rear wall (8), the first plastic film side wall (14) or the second plastic film side wall (22).

7. The plastic film bottom bag (1) according to any one of the preceding claims,
**characterized in that**
said plastic film bottom bag, in addition to the first and second side fold welded joint (16, 24) in the region of the plastic film front wall (2), the plastic film rear wall (8), the first plastic film side wall (14) and the second plastic film side wall (12), in particular including the respective transitions, does not have any further welded joint extending from or at a distance from the bag opening edge in the direction of the bag end (32) or up to the bag end (32).

8. The plastic film bottom bag (1) according to any one of the preceding claims,
**characterized in that**
the plastic film front wall (2) and/or plastic film rear wall (8) have/has a single- or multi-layer film material (66) and/or that the film material (66) of the plastic film front wall (2) and/or plastic film rear wall (8) comprises or consists of polyolefins, preferably polyethylene and/or polypropylene and particularly preferably HD polyethylene.

9. The plastic film bottom bag (1) according to any one of the preceding claims,
**characterized in that**
said plastic film bottom bag is formed substantially in one piece and/or that the plastic film front wall (2), the plastic film bag bottom (68) and the plastic film rear wall (8) are present in a contiguous manner, preferably without a connecting joint, particularly preferably in one piece, and/or that
the plastic film front wall (2), the first side wall section (18) of the first plastic film side wall (14) and the first side wall section (26) of the second plastic film side wall (22) are present in a contiguous manner, preferably without a connecting joint, particularly preferably in one piece, and/or that
the plastic film rear wall (8), the second side wall section (20) of the first plastic film side wall (14) and the second side wall section (28) of the second plastic film side wall (22) are present in a contiguous manner, preferably without a connecting joint, particularly preferably in one piece.

10. The plastic film bottom bag (1) according to any one of the preceding claims,
**characterized in that**
in the transition from the plastic film front wall (2) to the plastic film bag bottom (68), along and in the region of the crease (52), the plastic film front wall (2) and the plastic film bag bottom (68) are welded to one another so as to form a seam or casing seam (74), and that
in the transition from the plastic film rear wall (8) to the plastic film bag bottom (68) along and in the region of the crease (54), the plastic film rear wall (8) and the plastic film bag bottom (68) are welded to one another so as to form a seam or casing seam (84).

11. The plastic film bottom bag (1) according to any one of the preceding claims,
**characterized in that**
a fold or crease (150) is present in the transition from the first plastic film side wall (14) to the plastic film bag bottom (68) and/or that
in the transition from the first plastic film side wall (14) to the plastic film bag bottom (68) along and in the region of the fold or crease (150), the first plastic film side wall (14) and the plastic film bag bottom (68) are welded to one another so as to form a seam or casing seam (78), and that
a fold or crease (also referred to as a fourth bottom fold or crease (152)) is present in the transition from the second plastic film side wall (22) to the plastic film bag bottom (68) and/or that in the transition from the second plastic film side wall (22) to the plastic film bag bottom (68) along and in the region of the fold or crease (152), the second plastic film side wall (22) and the plastic film bag bottom (68) are welded to one another so as to form a seam or casing seam (82).

12. The plastic film bottom bag (1) according to any one of the preceding claims,
**characterized in that**
the plastic film bag bottom (68) has a central fold (56) or crease which extends at a distance from or from the first side edge (4, 10) in the direction of or up to the opposite second side edge (6, 12).

13. The plastic film bottom bag (1) according to any one of the preceding claims,
**characterized in that**
the width of the plastic film front wall (2) and/or the width of the plastic film rear wall (8) is greater than or equal to, in particular greater than, the sum formed from the width of the first side wall section (18) of the first plastic film side wall (14) and the first side wall section (26) of the second plastic film side wall (22) and/or the sum formed from the width of the second side wall section (20) of the first plastic film side wall (14) and the second side wall section (28) of the second plastic film side wall (22).

14. The plastic film bottom bag (1) according to any one of the preceding Claims,
**characterized in that**
the plastic film bag bottom (68) has an embossing welding pattern, which is applied in particular to the outer side.

15. The plastic film bottom bag (1) according to Claim 14, **characterized in that** the embossing welding pattern comprises or constitutes a honeycomb structure, a line structure or an annular structure.

16. The plastic film bottom bag (1) according to any one of the preceding Claims,
**characterized in that**
the first side fold welded joint (16), the first welded joint (63) and the second welded joint (65) have a common merging region (62) and/or that
the second side fold welded joint (24), the third welded joint (67) and the fourth welded joint (69) have a common merging region (64).

17. The plastic film bottom bag (1) according to any one of the preceding claims, further comprising
at least one first carrying element (70), preferably on or adjacent to the bag opening (30), on the plastic film front wall (2) and/or at least one second carrying element (72), preferably on or adjacent to the bag opening (30), on the plastic film rear wall (8).

18. The plastic film bottom bag (1) according to Claim 17, **characterized in that** the at least one carrying element (70, 72) constitutes a grip hole, a holding loop or a handle.

19. The plastic film bottom bag (1) according to Claim 17 or 18, **characterized in that**
the first carrying element (70) is attached or is present in the region of the single- or multi-layer film strip (50), in particular opening edge seam, of the plastic film front wall (2), and/or that
the second carrying element (72) is attached or is present in the region of the single- or multi-layer film strip (51), in particular opening edge seam, of the plastic film rear wall (8).

20. The plastic film bottom bag (1) according to any one of the preceding claims, further containing
an inlay bottom, which is in particular more rigid than the plastic film bag bottom (68).

21. A blank (100A) for a plastic film bottom bag (1) according to any one of Claims 1 to 16 made of a single- or multi-layer plastic film having a plastic film front wall section (2A), a substantially rectangular or square plastic film bag bottom section (68A), in particular integrally, adjoining the latter along a first bottom side edge (52A), and a plastic film rear wall section (8A), in particular integrally, adjoining said plastic film bag bottom section, opposite the plastic film front wall section (2A), along a second bottom side edge (54A), wherein triangular or trapezoidal sections (104A, 102A) respectively adjoin, in particular integrally, the opposite bottom side edges (150A, 152A) of the plastic film bag bottom section (68A) which are not connected to the plastic film front wall section (2A) and the plastic film rear wall section (8A), wherein the plastic film front wall section (2A) has, on side edge contours (4A, 6A) which are opposite each other, in particular integrally, an extension section (18 A, 26A) in each case, with an inclined bottom-side edge (122A, 130A), which forms an obtuse angle (α) with the first bottom side edge (52A) when the blank (100A) is arranged in a plane, wherein the distance between the opposite side edge contours (4A, 6A) of the plastic film front wall section (2A) substantially corresponds to the distance between the third (150A) and fourth (152A) bottom side edge and wherein the plastic film rear wall section (8A) has, on lateral edge contours (10A, 12A) which are opposite each other, in particular integrally, an extension section (20A, 28A) in each case, with an inclined bottom-side edge (136A, 128A), which forms an obtuse angle (α') with the second bottom side edge (54A) when the blank (100A) is arranged in a plane, wherein the distance between the opposite side edge contours (10A, 12A) of the plastic film rear wall section (8A) substantially corresponds to the distance between the third (150A) and fourth (152A) bottom side edge.

22. Use of the plastic film bottom bag (1) according to any one of Claims 1 to 20 as, in particular repeatedly, reusable bags or reusable pouch.

## Revendications

1. Sac à fond en film plastique (1) avec une ouverture de sac (30) et une extrémité de sac opposée (32), comprenant
- une paroi avant en film plastique (2) avec un bord d'ouverture de sac ainsi qu'un premier bord latéral (4) et un deuxième bord latéral opposé (6),
- une paroi arrière en film plastique (8) avec un bord d'ouverture de sac ainsi qu'avec un premier bord latéral (10) et un deuxième bord latéral opposé (12),
- une première paroi latérale en film plastique (14) avec un bord d'ouverture de sac ainsi qu'avec un premier joint de soudure de pli latéral (16) s'étendant depuis ou à distance du bord d'ouverture de sac en direction de l'extrémité de sac (32) ou jusqu'à l'extrémité de sac (32), comprenant, de part et d'autre du premier joint de soudure de pli latéral (16), une première et une deuxième section de paroi latérale (18, 20) qui s'étendent respectivement depuis le premier joint de soudure de pli latéral (16) jusqu'au premier bord latéral (4, 10) de la paroi avant en film plastique (2) et de la paroi arrière en film plastique (8),
- une deuxième paroi latérale en film plastique (22) avec un bord d'ouverture de sac ainsi qu'avec un deuxième joint de soudure de pli latéral (24) s'étendant depuis ou à distance du bord d'ouverture de sac en direction de l'extrémité de sac (32) ou jusqu'à l'extrémité de sac (32), comprenant, de part et d'autre du deuxième joint de soudure de pli latéral (24), une première et une deuxième section de paroi latérale (26, 28) qui s'étendent respectivement depuis le deuxième joint de soudure de pli latéral (24) jusqu'au deuxième bord latéral (6, 12) de la paroi avant en film plastique (2) et de la paroi arrière en film plastique (8), et
- un fond de sac en film plastique (68) avec un côté intérieur et un côté extérieur,
dans lequel une première pliure de fond (52) étant présent dans la transition entre la paroi avant en film plastique (2) et le fond de sac en film plastique (68), et un deuxième pliure de fond (54) étant présent dans la transition entre la paroi arrière en film plastique (8) et le fond du sac en film plastique (68),
**caractérisé en ce que** depuis un premier point d'embouchure (58), au niveau duquel la première pliure de fond (52) débouche dans le premier bord latéral (4) de la paroi avant en film plastique (2), et le premier joint de soudure de pli latéral (16) se terminant à distance du fond de sac en film plastique (68), s'étend un premier joint de soudure (63), et **en ce que**
depuis un deuxième point d'embouchure (76), au niveau duquel la deuxième pliure de fond (54) débouche dans le premier bord latéral (10) de la paroi arrière en film plastique (8), et le premier joint de soudure de pli latéral (16) se terminant à distance du fond de sac en film plastique (68), s'étend un deuxième joint de soudure (65), et/ou **en ce que**
depuis un troisième point d'embouchure (60), au niveau duquel la première pliure de fond (52) débouche dans le deuxième bord latéral (6) de la paroi avant en film plastique (2), et le deuxième joint de soudure de pli latéral (24) se terminant à distance du fond de sac en film plastique (68), s'étend un troisième joint de soudure (67), et **en ce que**
depuis un quatrième point d'embouchure (80), au niveau duquel la deuxième pliure de fond (54) débouche dans le deuxième bord latéral (12) de la paroi arrière en film plastique (8), et le deuxième joint de soudure de pli latéral (24) se terminant à distance du fond de sac en film plastique (68), s'étend un quatrième joint de soudure (69).

2. Sac à fond en film plastique (1) selon la revendication 1, **caractérisé en ce que** le premier joint de soudure de pli latéral (16) présent entre la première section de paroi latérale (18) et la deuxième section de paroi latérale (20) de la première paroi latérale en film plastique (14) est un ourlet de soudure de pli latéral (17) tourné vers l'extérieur, en particulier avec une largeur moyenne dans la plage allant de 1,0 à 4,0 mm, et **en ce que** le deuxième joint de soudure de pli latéral (24) présent entre la première section de paroi latérale (26) et la deuxième section de paroi latérale (28) de la deuxième paroi latérale en film plastique (22) est un ourlet de soudure de pli latéral (25) tourné vers l'extérieur, en particulier avec une largeur moyenne dans la plage allant de 1,0 à 4,0 mm.

3. Sac à fond en film plastique (1) selon l'une quelconque des revendications 1 ou 2, **caractérisé en ce que**
un pli (36), en particulier une pliure, est présent dans la transition de la paroi avant en film plastique (2) à la première section de paroi latérale (18) de la première paroi latérale en film plastique (14) et/ou, de préférence et, **en ce que** un pli (38), en particulier une pliure, est présent dans la transition de la paroi avant en film plastique (2) à la première section de paroi latérale (26) de la deuxième paroi latérale en film plastique (22), et/ou, de préférence et, **en ce que** un pli (40), en particulier une pliure, est présent dans la transition de la paroi arrière en film plastique (8) à la deuxième section de paroi latérale (20) de la première paroi latérale en film plastique (14), et/ou, de préférence et, **en ce que** un pli (42), en particulier une pliure, est présent dans la transition de la paroi arrière en film plastique (8) à la deuxième section de paroi latérale (28) de la deuxième paroi latérale en film plastique (22).

4. Sac à fond en film plastique (1) selon l'une quelconque des revendications 1 à 3, **caractérisé en ce que**
dans la transition de la paroi avant en film plastique (2) à la première section de paroi latérale (18) de la première paroi latérale en film plastique (14), le long et dans la zone du pli (36) ou de la pliure, la paroi avant en film plastique (2) et la première section de paroi latérale (18) de la première paroi latérale en film plastique (14) se présentent sous forme soudée l'une à l'autre en formant un ourlet ou un ourlet creux (21), et/ou, de préférence et, **en ce que**
dans la transition de la paroi avant en film plastique (2) à la première section de paroi latérale (26) de la deuxième paroi latérale en film plastique (22), le long et dans la zone du pli (38) ou de la pliure, la paroi avant en film plastique (2) et la première section de paroi latérale (26) de la deuxième paroi latérale en film plastique (22) se présentent sous forme soudée l'une à l'autre en formant un ourlet ou un ourlet creux (23), et/ou, de préférence et, **en ce que**
dans la transition de la paroi arrière en film plastique (8) à la deuxième section de paroi latérale (20) de la première paroi latérale en film plastique (14), le long et dans la zone du pli (40) ou de la pliure, la paroi arrière en film plastique (8) et la deuxième section de paroi latérale (20) de la première paroi latérale en film plastique (14) se présentent sous forme soudée l'une à l'autre en formant un ourlet ou un ourlet creux (27), et/ou, de préférence et, **en ce que**
dans la transition de la paroi arrière en film plastique (8) à la deuxième section de paroi latérale (28) de la deuxième paroi latérale en film plastique (22), le long et dans la zone du pli (42) ou de la pliure, la paroi arrière en film plastique (8) et la deuxième section de paroi latérale (28) de la deuxième paroi latérale en film plastique (22) se présentent sous forme soudée l'une à l'autre en formant un ourlet ou un ourlet creux (29).

5. Sac à fond en film plastique (1) selon l'une quelconque des revendications précédentes, **caractérisé en ce que**
la paroi avant en film plastique (2) présente, dans la zone du bord d'ouverture de sac, à l'intérieur et/ou à l'extérieur, en particulier à l'intérieur, une bande en film (50) à une ou plusieurs couches et/ou, de préférence et, **en ce que**
la paroi arrière en film plastique (8) présente, dans la zone du bord d'ouverture de sac, à l'intérieur et/ou à l'extérieur, en particulier à l'intérieur, une bande en film (51) à une ou plusieurs couches et/ou, en particulier et, **en ce que**
la première paroi latérale en film plastique (14) présente, dans la zone du bord d'ouverture de sac, à l'intérieur et/ou à l'extérieur, en particulier à l'intérieur, une bande en film (53) à une ou plusieurs couches et/ou, en particulier et, **en ce que** la deuxième paroi latérale en film plastique (22) présente, dans la zone du bord d'ouverture de sac, à l'intérieur et/ou à l'extérieur, en particulier à l'intérieur, une bande en film (55) à une ou plusieurs couches.

6. Sac à fond en film plastique (1) selon la revendication 5, **caractérisé en ce que** la bande en film (50, 51, 53, 55) à une ou plusieurs couches, en particulier en tant que constituant de la paroi avant en film plastique (2), de la paroi arrière en film plastique (8), de la première paroi latérale en film plastique (14) et/ou de la deuxième paroi latérale en film plastique (22), est un ourlet de bord d'ouverture et/ou est formée d'une seule pièce avec la paroi avant en film plastique (2), la paroi arrière en film plastique (8), la première paroi latérale en film plastique (14) ou la deuxième paroi latérale en film plastique (22).

7. Sac à fond en film plastique (1) selon l'une quelconque des revendications précédentes, **caractérisé en ce que**
celui-ci ne présente pas, en plus du premier et du deuxième j oint de soudure de pli latéral (16, 24), dans la zone de la paroi avant en film plastique (2), de la paroi arrière en film plastique (8), de la première paroi latérale en film plastique (14) et de la deuxième paroi latérale en film plastique (12), en particulier y compris les transitions respectives, d'autre joint de soudure s'étendant depuis ou à distance du bord d'ouverture de sac en direction de l'extrémité de sac (32) ou jusqu'à l'extrémité de sac (32).

8. Sac à fond en film plastique (1) selon l'une quelconque des revendications précédentes, **caractérisé en ce que**
la paroi avant en film plastique (2) et/ou la paroi arrière en film plastique (8) présentent un matériau en film (66) à une ou plusieurs couches et/ou **en ce que** le matériau en film (66) de la paroi avant en film plastique (2) et/ou de la paroi arrière en film plastique (8) comprend des polyoléfines, de préférence du polyéthylène et/ou du polypropylène et de manière particulièrement préférée du polyéthylène HD, ou en est constitué.

9. Sac à fond en film plastique (1) selon l'une quelconque des revendications précédentes, **caractérisé en ce que**
celui-ci est réalisé essentiellement d'une seule pièce et/ou **en ce que** la paroi avant en film plastique (2), le fond de sac en film plastique (68) et la paroi arrière en film plastique (8) se présentent sous forme continue, de préférence sans joint de liaison, de manière particulièrement préférée d'une seule pièce et/ou **en ce que** la paroi avant en film plastique (2), la première section de paroi latérale (18) de la première paroi latérale en film plastique (14) et la première section de paroi latérale (26) de la deuxième paroi latérale en film plastique (22) se présentent sous forme continue, de préférence sans joint de liaison, de préférence d'une seule pièce, et/ou **en ce que** la paroi arrière en film plastique (8), la deuxième section de paroi latérale (20) de la première paroi latérale en film plastique (14) et la deuxième section de paroi latérale (28) de la deuxième paroi latérale en film plastique (22) se présentent sous forme continue, de préférence sans joint de liaison, de manière particulièrement préférée d'une seule pièce.

10. Sac à fond en film plastique (1) selon l'une quelconque des revendications précédentes, **caractérisé en ce que**
dans la transition de la paroi avant en film plastique (2) au fond de sac en film plastique (68), la paroi avant en film plastique (2) et le fond de sac en film plastique (68) se présentent sous forme soudée l'un à l'autre le long et dans la zone de la pliure (52) en formant un ourlet ou un ourlet creux (74), et **en ce que** dans la transition de la paroi arrière en film plastique (8) au fond de sac en film plastique (68), la paroi arrière en film plastique (8) et le fond de sac en film plastique (68) se présentent sous forme soudée l'un à l'autre le long et dans la zone de la pliure (54) en formant un ourlet ou un ourlet creux (84).

11. Sac à fond en film plastique (1) selon l'une quelconque des revendications précédentes, **caractérisé en ce que**
dans la transition de la première paroi latérale en film plastique (14) au fond de sac en film plastique (68), un pli ou une pliure (150) est présent et/ou **en ce que** dans la transition de la première paroi latérale en film plastique (14) au fond de sac en film plastique (20), le long et dans la zone du pli ou de la pliure (150), la première paroi latérale en film plastique (14) et le fond de sac en film plastique (68) se présentent sous forme soudée l'un à l'autre en formant un ourlet ou un ourlet creux (78), et **en ce que**
dans la transition de la deuxième paroi latérale en film plastique (22) au fond de sac en film plastique (68), un pli ou une pliure (également appelé quatrième pli ou pliure de fond (152)) est présent et/ou **en ce que** dans la transition de la deuxième paroi latérale en film plastique (22) au fond de sac en film plastique (68), le long et dans la zone du pli ou de la pliure (152), la deuxième paroi latérale en film plastique (22) et le fond de sac en film plastique (68) se présentent sous forme soudée l'un à l'autre en formant un ourlet ou un ourlet creux (82).

12. Sac à fond en film plastique (1) selon l'une quelconque des revendications précédentes, **caractérisé en ce que**
le fond de sac en film plastique (68) présente un pli (56) ou une pliure centrale qui s'étend à distance du ou depuis le premier bord latéral (4, 10) en direction du ou jusqu'au deuxième bord latéral opposé (6, 12).

13. Sac à fond en film plastique (1) selon l'une quelconque des revendications précédentes, **caractérisé en ce que**
la largeur de la paroi avant en film plastique (2) et/ou la largeur de la paroi arrière en film plastique (8) est supérieure ou égale, en particulier supérieure, à la somme formée par la largeur de la première section de paroi latérale (18) de la première paroi latérale en film plastique (14) et de la première section de paroi latérale (26) de la deuxième paroi latérale en film plastique (22) et/ou la somme formée par la largeur de la deuxième section de paroi latérale (20) de la première paroi latérale en film plastique (14) et de la deuxième section de paroi latérale (28) de la deuxième paroi latérale en film plastique (22).

14. Sac à fond en film plastique (1) selon l'une quelconque des revendications précédentes, **caractérisé en ce que**
le fond de sac en film plastique (68) présente un motif de soudure en relief, en particulier appliqué sur le côté extérieur.

15. Sac à fond en film plastique (1) selon la revendication 14, **caractérisé en ce que** le motif de soudure en relief comprend ou est une structure en nid d'abeilles, une structure linéaire ou une structure annulaire.

16. Sac à fond en film plastique (1) selon l'une quelconque des revendications précédentes, **caractérisé en ce que**
le premier joint de soudure de pli latéral (16), le premier joint de soudure (63) et le deuxième joint de soudure (65) présentent une zone d'embouchure commune (62) et/ou **en ce que**
le deuxième joint de soudure de pli latéral (24), le troisième joint de soudure (67) et le quatrième joint de soudure (69) présentent une zone d'embouchure commune (64).

17. Sac à fond en film plastique (1) selon l'une quelconque des revendications précédentes, comprenant en outre
au moins un premier élément de support (70), de préférence sur ou au adjacent à l'ouverture de sac (30), sur la paroi avant en film plastique (2) et/ou au moins un deuxième élément de support (72), de préférence sur ou au adjacent à l'ouverture de sac (30), sur la paroi arrière en film plastique (8).

18. Sac à fond en film plastique (1) selon la revendication 17, **caractérisé en ce que** l'au moins un élément de support (70, 72) est un trou de préhension, une boucle de maintien ou une poignée de maintien.

19. Sac à fond en film plastique (1) selon la revendication 17 ou 18, **caractérisé en ce que** le premier élément de support (70) est fixé ou est présent dans la zone de la bande en film (50) à une ou plusieurs couches, en particulier de l'ourlet de bord d'ouverture, de la paroi avant en film plastique (2) et/ou **en ce que**
le deuxième élément de support (72) est fixé ou est présent dans la zone de la bande en film (51) à une ou plusieurs couches, en particulier de l'ourlet de bord d'ouverture, de la paroi arrière en film plastique (8).

20. Sac à fond en film plastique (1) selon l'une quelconque des revendications précédentes, contenant en outre
un fond d'insertion, qui est en particulier plus rigide que le fond de sac en film plastique (68).

21. Découpe (100A) pour un sac à fond en film plastique (1) selon l'une quelconque des revendications 1 à 16, constituée d'un film plastique à une ou plusieurs couches avec une section de paroi avant en film plastique (2A), une section de fond de sac en film plastique (68A) essentiellement rectangulaire ou carrée s'y raccordant le long d'un premier bord latéral de fond (52A), en particulier d'une seule pièce, et une section de paroi arrière en film plastique (8A) se raccordant à celle-ci, à l'opposé de la section de paroi avant en film plastique (2A), le long d'un deuxième bord latéral de fond (54A), en particulier d'une seule pièce, les bords latéraux de fond opposés (150A, 152A) de la section de fond de sac en film plastique (68A), qui ne sont pas reliés à la section de paroi avant en film plastique (2A) et à la section de paroi arrière en film plastique (8A), se raccordant respectivement à des sections triangulaires ou trapézoïdales (104A, 102A), en particulier d'une seule pièce, la section de paroi avant en film plastique (2A) présentant, sur des étendues de bord latéral opposées (4A, 6A), en particulier d'une seule pièce, respectivement une section d'extension (18A, 26A), avec un bord incliné côté fond (122A, 130A) qui forme un angle obtus (α) lors de l'agencement de la découpe (100A) dans un plan avec le premier bord latéral de fond (52A), la distance des étendues de bord latéral opposées (4A, 6A) de la section de paroi avant en film plastique (2A) correspondant essentiellement à la distance entre le troisième (150A) et le quatrième bord latéral de fond (152A) et
la section de paroi arrière en film plastique (8A) présentant, sur des étendues de bord latéral opposées (10A, 12A), en particulier d'une seule pièce, respectivement une section d'extension (20A, 28A), avec un bord incliné côté fond (136A, 128A), qui forme un angle obtus (α') lors de l'agencement de la découpe (100A) dans un plan avec le deuxième bord latéral de fond (54A), la distance entre les étendues de bord latéral opposées (10A, 12A) de la section de paroi arrière en film plastique (8A) correspondant essentiellement à la distance entre le troisième (150A) et le quatrième (152A) bord latéral de fond.

22. Utilisation du sac à fond en film plastique (1) selon l'une quelconque des revendications 1 à 20 en tant que sac réutilisable ou poche réutilisable, en particulier à plusieurs reprises.
